# EUROPÄISCHE PATENTSCHRIFT

(11) **EP 2 640 996 B1**
(45) Veröffentlichungstag und Bekanntmachung des Hinweises auf die Patenterteilung: **12.08.2015**
(21) Anmeldenummer: 11819075.0
(22) Anmeldetag: 15.11.2011
(51) Int. Cl.: F16D 27/118

(54) **SCHALTBARE KUPPLUNG**
SWITCHABLE COUPLING
DISPOSITIF D'ACCOUPLEMENT DÉBRAYABLE

(30) Priorität: 16.11.2010 DE 202010012903 U
(43) Veröffentlichungstag der Anmeldung: 25.09.2013
(73) Patentinhaber: Volkswagen Aktiengesellschaft, 38436 Wolfsburg (DE)
(72) Erfinder: VAN DER SEYLBERG, Frank, 09126 Chemnitz (DE); TENBERGE, Peter, 09123 Chemnitz (DE); BAUMGART, Rico, 09212 Limbach-Oberfrohna (DE)
(74) Vertreter: Rumrich, Gabriele
(86) Internationale Anmeldenummer: PCT/DE2011/075273
(87) Internationale Veröffentlichungsnummer: WO 2012/065606

(56) Entgegenhaltungen:
- EP-A2- 1 378 677
- WO-A1-02/50445
- DE-A1-102005 022 218

## Beschreibung

Die Erfindung betrifft eine schaltbare Kupplung nach dem Oberbegriff des ersten Patentanspruchs, die zwischen einem, beispielsweise als Riemenscheibe ausgeführten Antriebselement und einem Abtriebselement angeordnet ist, wobei die schaltbare Kupplung ein Kupplungssystem für eine reib- oder/und formschlüssige Verbindung zwischen dem Antriebselement und dem Abtriebselement aufweist sowie einen vorzugsweise elektromagnetischen Aktuator und ein Schaltglied in Wirknähe zum Aktuator und mindestens ein zwischen dem Abtriebselement und dem Schaltglied angeordnetes elastisches Betätigungselement, wobei das Schaltglied stufenlos zwischen einer Startstellung über eine Mittelstellung bis zu einer Endstellung bewegbar ist, wobei die schaltbare Kupplung in der Mittelstellung des Schaltglieds einen anderen Zustand (offen oder geschlossen) aufweist als in der Startstellung, und wobei das elastische Betätigungselement auf das Schaltglied eine Kraft in Richtung Startstellung ausübt und wobei der Aktuator auf das Schaltglied nur Kräfte in Richtung Endstellung ausübt, deren Maximalwert in jeder Stellung den Kraftwert des elastischen Betätigungselements übersteigt.

Solche vorzugsweise elektromagnetisch betätigte Kupplungen sind aus dem Stand der Technik bekannt. Aus der EP 1378677 geht zum Beispiel so eine schaltbare Kupplung zwischen einer Riemenscheibe als Antriebselement und einer Welle als Abtriebs-element hervor. Diese schaltbare Kupplung hat auch einen elektromagnetischen Aktuator, dessen Kraft im bestromten Zustand ein Schaltglied und weitere Bauteile der Kupplung so zueinander bewegt, dass diese in einen formschlüssigen Eingriff gebracht werden. Darüber hinaus weist diese schaltbare Kupplung auch ein elastisches Betätigungselement auf, das dem Schaltglied eine Federkraft entgegen der Kraft des Aktuators aufprägt, so dass nach dem Abschalten des Aktuators die Federkraft das Schaltglied außer Eingriff mit den weiteren Teilen der Kupplung bringt. Im Zustand "Kupplung = offen" ist demnach in dieser schaltbaren Kupplung der Aktuator nicht aktiv und verbraucht keine Energie. Im Zustand "Kupplung = geschlossen" muss in dieser schaltbaren Kupplung der Aktuator aber permanent aktiv sein und dann als elektromagnetische Aktuator bestromt werden, wobei er permanent Energie verbraucht. Auch aus der OS 1 575 762 ist eine elektromagnetische Zahnkupplung zwischen einem Antriebselement und einem Abtriebselement bekannt. Auch in dieser schaltbaren Kupplung muss der elektromagnetische Aktuator für den Schaltzustand "Kupplung = geschlossen" permanent bestromt sein. Durch die Form der Schaltverzahnung kann die dafür erforderliche Magnetkraft zwar reduziert, aber nicht komplett aufgehoben werden. Aus der DE 10331927 B3 ist ein Kupplungssteller für eine schaltbare Kupplung zwischen einem Antriebselement und einem Abtriebselement bekannt. In dieser Kupplung, vorzugsweise für Nutzfahrzeuge, wirkt der Kupplungssteller nicht direkt auf ein elastisches Betätigungselement der Kupplung, sondern auf ein Getriebe, das die erforderliche Kraft im Kupplungssteller zum Öffnen der Kupplung reduziert. Aber auch in dieser schaltbaren Kupplung verbraucht der Kupplungssteller Energie, um die schaltbare Kupplung im Zustand "Kupplung = offen" zu halten. Wird die Energiezufuhr zum Kupplungssteller abgeschaltet, so wirkt auch hier das elastische Betätigungs-element letztendlich der Kraft des Kupplungsstellers entgegen und schaltet die schaltbare Kupplung in den Zustand "Kupplung = geschlossen", wie das im Prinzip von den meisten Anfahrkupplungen in Fahrzeugen bekannt ist.

Aus diesem Stand der Technik ergibt sich somit die erste Teilaufgabe, eine schaltbare Kupplung zu erfinden, die die beiden Schaltzustände "Kupplung = offen" und "Kupplung = geschlossen" ohne Zufuhr und Verbrauch von Energie halten kann und deren Aktuator nur zum Umschalten zwischen den beiden Schaltzuständen Energie verbraucht.

Eine schaltbare Kupplung, die diese Teilaufgabe löst, geht aus der DE 102005001909 A1 hervor. Diese Kupplung hat ein elastisches Betätigungselement, das als bistabile Feder zwei stabile Formen annehmen kann. Eine schaltbare Kupplung mit so einer Feder kann so ausgestaltet sein, das die Schaltzustände "Kupplung = offen" und "Kupplung = geschlossen" ohne Zufuhr von Energie zu einem Aktuator stabil gehalten werden. Zum Umschalten so einer Kupplung ist dann aber ein Aktuator erforderlich, der in zwei entgegengesetzte Kraftrichtungen auf die bistabile Feder einwirken kann.

Nach diesem Stand der Technik ist die oben beschriebene Aufgabe dahingehend zu ergänzen, dass die schaltbare Kupplung so zu gestalten ist, dass deren Aktuator nur in einer Richtung Kräfte aufbringen muss, damit er als einseitig wirkender vorzugsweise elektromagnetischer Aktuator ausgeführt werden kann. Das ermöglicht einfache Wirkprinzipien und spart Bauraum und Kosten.

Aus der DE 102005022218 A1 ist dann noch ein weiterer relevanter Stand der Technik zu einem Betätigungssystem für eine schaltbare Kupplung bekannt. Diese schaltbare Kupplung hat einen Aktuator, der nur in einer Richtung auf ein Schaltglied der Kupplung wirkt und das entgegen der Kraft eines elastischen Betätigungselements. Im geschlossenen Zustand wird diese Kupplung durch einen selbsttätig einriegelnden Riegelmechanismus gehalten, der die Wirkprinzipien eines Rollen- oder Kugelfreilaufs aufweist. Um diese schaltbare Kupplung aus dem Schaltzustand "Kupplung = geschlossen" in den Schaltzustand "Kupplung = offen" umzuschalten, benötigt diese Kupplung aber einen zweiten Aktuator, um den Riegelmechanismus wieder zu lösen.

Der Erfindung liegt deshalb die Aufgabe zugrunde, eine schaltbare Kupplung zu realisieren, die die beiden Schaltzustände "Kupplung = offen" und "Kupplung = geschlossen" ohne Zufuhr und Verbrauch von Energie halten kann und deren Aktuator nur zum Umschalten zwischen den beiden Schaltzuständen Kräfte aufzubringen hat, und zwar nur in einer Richtung. Die erfindungsgemäße schaltbare Kupplung soll auch keine zusätzlichen Betätigungselemente oder weitere Aktuatoren für eventuell erforderliche Riegel zum Halten bestimmter Schaltzustände benötigen.

Diese Aufgabe wird mit den kennzeichnenden Merkmalen des ersten Patentanspruchs gelöst, wobei die schaltbare Kupplung zwischen einem Antriebselement und einem Abtriebselement angeordnet ist und ein Kupplungssystem für eine reib- oder/und formschlüssige Verbindung zwischen dem Antriebselement und dem Abtriebselement aufweist sowie einen vorzugsweise elektromagnetischen Aktuator und ein Schaltglied in Wirknähe zum Aktuator und mindestens ein zwischen dem Abtriebselement und dem Schaltglied angeordnetes elastisches Betätigungselement, wobei das Schaltglied stufenlos zwischen einer Startstellung über eine Mittelstellung bis zu einer Endstellung bewegbar ist und wobei die schaltbare Kupplung in der Mittelstellung des Schaltglieds einen anderen Zustand (offen oder geschlossen) aufweist als in der Startstellung, und wobei das elastische Betätigungselement auf das Schaltglied eine Kraft in Richtung Startstellung ausübt und wobei der Aktuator auf das Schaltglied nur Kräfte in Richtung Endstellung ausübt, deren Maximalwert in jeder Stellung den Kraftwert des elastischen Betätigungselements übersteigt, und erfindungsgemäß auf dem Abtriebselement oder auf mit dem Abtriebselement verbundenen Teilen ein Riegel in Umfangsrichtung drehbar angeordnet ist, aber in axialer Richtung zwischen einem ersten Riegelanschlag und einem zweiten Riegelanschlag gehalten ist, und dass mit dem Schaltglied oder mit dem Riegel ein Verdrehsystem verbunden ist, das erste Wirkflächen aufweist, die bei einer Bewegung des Schaltglieds von einer Position kurz hinter der Mittelstellung bis zur Endstellung auf erste schräge Formelemente an dem Riegel oder erste schräge Formelemente an dem Schaltglied stoßen und dabei erste federnde Verdrehelemente vorspannen und dadurch den Riegel relativ zum Schaltglied um einen ersten Teilwinkel verdrehen, und dass das Verdrehsystem zweite Wirkflächen aufweist, die bei einer Bewegung des Schaltglieds von der Endstellung zurück bis zur Mittelstellung auf zweite schräge Formelemente an dem Riegel oder zweite schräge Formelemente an dem Schaltglied stoßen und dabei zweite federnde Verdrehelemente vorspannen und dadurch den Riegel relativ zum Schaltglied um einen zweiten Teilwinkel verdrehen.

Die erfindungsgemäße Kupplung soll also einen Riegel aufweisen, der in noch zu beschreibender Art und Weise einen Schaltzustand verriegelt oder einen Umschalt-vorgang ermöglicht. Dazu muss der Riegel aber verschiedene Positionen einnehmen. Um dafür keinen gesonderten Aktuator zu benötigen wird der Riegel von einem mit dem Riegel selbst oder mit dem Schaltglied verbundenen Verdrehsystem durch die vom Aktuator erzeugte Bewegung des Schaltglieds möglichst um die Betätigungsachse des Schaltglieds verdreht.

In weiterer Ausgestaltung der Erfindung nimmt der Riegel nach einer ersten Bewegung des Schaltglieds von der Startstellung bis zur Endstellung und wieder zurück zur Mittelstellung in Umfangsrichtung eine erste Relativposition zu dem Schaltglied ein, bei der in der Mittelstellung das Schaltglied mit einem Schaltgliedanschlag in axialer Wirkrichtung auf ein Riegelanschlag an dem Riegel trifft. Der Riegel weist zudem zweite formschlüssige Sicherungselemente auf und das Schaltglied hat ebenfalls zweite formschlüssige Sicherungselemente, die in dieser Mittelstellung in Eingriff stehen und diese erste Relativposition in Umfangsrichtung fixieren.

Bei einer ersten Betätigung des Aktuators wirkt dieser mit einer Kraft auf das Schaltglied, das entgegen der Kraft des elastischen Betätigungselements in axialer Richtung aus einer Startstellung bis zu einer Endstellung verlagert wird und dabei den Riegel um einen ersten Teilwinkel verdreht. Danach wird der Aktuator deaktiviert und das elastische Betätigungselement bewegt das Schaltglied wieder zurück in die Mittelstellung. Dabei wird der Riegel um einen zweiten Teilwinkel verdreht. Jetzt steht der Riegel in so einer Relativposition zum Schaltglied, dass das Schaltglied mit einem Schaltgliedanschlag auf einen ersten Riegelanschlag des Riegels trifft. Damit ist eine weitere Bewegung des Schaltglieds in Richtung zur Startstellung verriegelt. Zweite formschlüssige Sicherungselemente am Riegel und am Schaltglied verhindern, das sich diese Relativposition in Umfangsrichtung zwischen Riegel und Schaltglied zum Beispiel in Folge von Schwingungen in der schaltbaren Kupplung von selbst verändert.

Um zu gewährleisten, dass nach einer erneuten Aktivierung des Aktuators das Schaltglied bis zur Startstellung bewegt werden kann, weist der Riegel Riegelnuten auf. Nach einer zweiten Bewegung des Schaltglieds von der Mittelstellung bis zur Endstellung und wieder zurück zur Mittelstellung nimmt der Riegel in Umfangsrichtung eine zweite Relativposition zu dem Schaltglied ein, bei der ab der Mittelstellung das Schaltglied mit all seinen Formelementen ungehindert durch die Riegelnuten im Riegel hindurchfahren kann, und zwar bis zur Startstellung, in der das Schaltglied auf einen Startanschlag trifft. Darüber hinaus weist der Riegel dritte formschlüssige Sicherungs-elemente des Riegels und das Schaltglied dritte formschlüssige Sicherungselemente des Schaltglieds auf, die in dieser zweiten Relativposition in jeder Axialposition des Schaltglieds zwischen der Mittelstellung und der Startstellung mit einander in Eingriff stehen und so diese Relativposition in Umfangsrichtung fixieren.

Damit sich nach jeder Betätigung des Aktuators und der daraus folgenden Bewegung des Schaltglieds von der Mittelstellung bis zur Endstellung und der daran anschließenden Rückbewegung zur Mittelstellung nach Abschalten des Aktuators die erste und die zweite Relativposition in Umfangrichtung zwischen Schaltglied und Riegel abwechseln, ist erfindungsgemäß vorgesehen, dass die erste Relativposition und die zweite Relativposition zwischen Schaltglied und Riegel in Umfangsrichtung um einen Teilungswinkel versetzt sind und dass der erste Teilwinkel und der zweite Teilwinkel zusammen diesen Teilungswinkel ergeben und dass dieser Teilungswinkel ein geradzahliger Teilwinkel von 360° ist. Vorzugsweise sind der erste Teilwinkel und der zweite Teilwinkel gleich groß und damit halb so groß wie der Teilungswinkel.

Die zyklische Verdrehung des Riegels zum Schaltglied erfolgt durch eine erste Teilverdrehung um den ersten Teilwinkel bei der Bewegung des Schaltglieds von der Mittelstellung zur Endstellung und durch eine zweite Teilverdrehung um den zweiten Teilwinkel bei der Bewegung des Schaltglieds von der Endstellung zur Mittelstellung. Damit sich der Riegel nach der zweiten Teilverdrehung bei der nächsten Bewegung des Schaltglieds von der Mittelstellung zur Endstellung nicht um den gleichen zweiten Teilwinkel wieder zurück verdreht, ist erfindungsgemäß vorgesehen, dass wenn sich das Schaltglied in der Mittelstellung befindet, die ersten Wirkflächen des Verdrehsystems außer Eingriff mit dem Schaltglied oder dem Riegel sind und dadurch die ersten federnden Verdrehelemente entspannt sind. Damit sich der Riegel nach der ersten Teilverdrehung bei der nächsten Bewegung des Schaltglieds von der Endstellung zur Mittelstellung nicht um den gleichen ersten Teilwinkel wieder zurück verdreht, ist erfindungsgemäß vorgesehen, dass wenn sich das Schaltglied in der Endstellung befindet, die zweiten Wirkflächen des Verdrehsystems außer Eingriff mit dem Schaltglied oder dem Riegel sind und dadurch die zweiten federnden Verdrehelemente entspannt sind.

Eine geometrische Bedingung für das korrekte zyklische Verdrehen ist zudem, dass der Teilungswinkel zwischen den ersten formschlüssigen Sicherungselementen und den zweiten formschlüssigen Sicherungselementen am Schaltglied minus dem Versatzwinkel zwischen den ersten formschlüssigen Sicherungselementen und den zweiten formschlüssigen Sicherungselementen am Riegel plus dem ersten Teilwinkel oder minus dem zweiten Teilwinkel ein ganzzahliges Vielfaches des Teilungswinkels zwischen der ersten Relativposition und der zweiten Relativposition ist.

Schließlich ist noch erfinderisch vorgesehen, dass, wenn sich das Schaltglied in der Endstellung befindet, erste formschlüssige Sicherungselemente am Riegel mit ersten formschlüssigen Sicherungselementen am Schaltglied in Eingriff stehen und die Relativposition von Schaltglied und Riegel in dieser Schaltstellung in Umfangsrichtung fixieren. Durch die verschiedenen Sicherungselemente ist gewährleistet, dass sich nach den Verdrehungen um bestimmte Teilwinkel und während des Entspannens federnder Verdrehelemente der Riegel zum Schaltglied nicht von selbst verstellt, zum Beispiel in Folge von Schwingungen und Vibrationen in der schaltbaren Kupplung.

Die Erfindung ist nicht nur auf die Merkmale ihrer Ansprüche beschränkt. Denkbar und vorgesehen sind auch Kombinationsmöglichkeiten einzelner Anspruchsmerkmale und Kombinationsmöglichkeiten einzelner Anspruchsmerkmale mit dem in den Vorteils-angaben und zu den Ausgestaltungsbeispielen Offenbarten.

Die Erfindung bezieht sich insbesondere auch auf nach dem Stand der Technik gleichwirkende Lösungen, von denen einige schon in den Ausführungsbeispielen beschrieben sind.

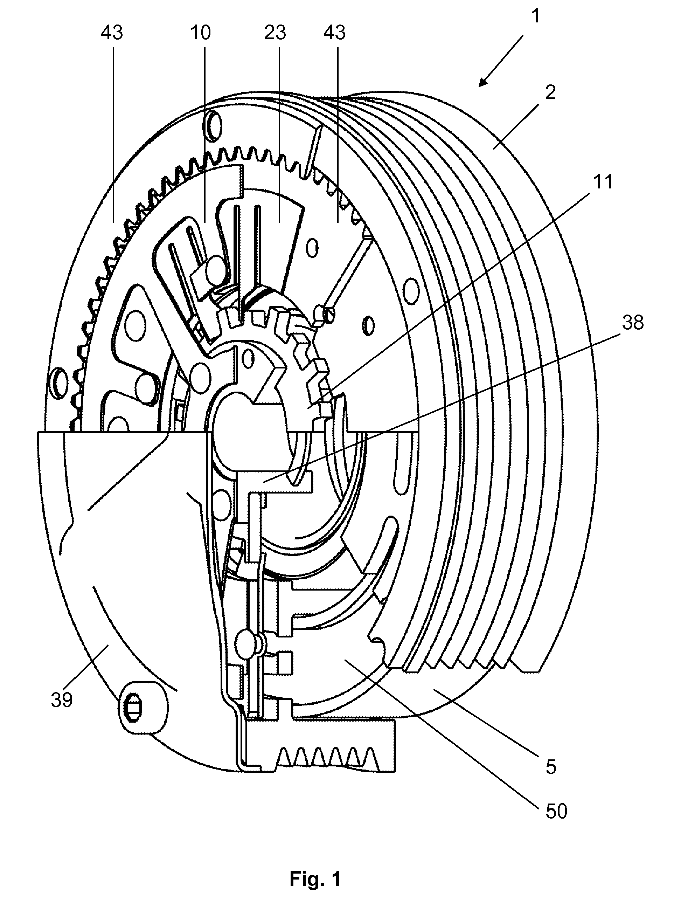

Drei Ausführungsvarianten der erfindungsgemäßen schaltbaren Kupplung sind beispielhaft in den Fig. 1 bis 20 dargestellt und bezüglich der Anordnung der Kupplungselemente und deren Funktionsweise erläutert. Dabei beziehen sich die Figuren 1 bis 12 auf eine erste Ausführungsvariante mit Zahnkupplung und Reibungskupplung, die hier besonders detailliert beschrieben ist. Hierzu zeigen:
- Fig. 1: ein Gesamtbild mit ersten Details der ersten Ausführungsvariante der erfindungsgemäßen schaltbaren Kupplung,
- Fig. 2: weitere Details der ersten Ausführungsvariante,
- Fig. 3: Details zum Schaltglied und dem damit verbundenen Verdrehsystems,
- Fig. 4: weitere Details zum Riegel,
- Fig. 5: weitere Details zum Schaltsystem,
- Fig. 6: weitere Details zum elastischen Betätigungselement,
- Fig. 7: die Position eines Anschlags für das elastische Betätigungselement auf dem Schaltglied,
- Fig. 8: die schaltbare Kupplung in Startstellung, Mittelstellung und Endstellung,
- Fig. 9: in einer prinzipiellen Darstellung das Schaltglied samt Verdrehsystem relativ zum Riegel in Startstellung, Mittelstellung und Endstellung,
- Fig. 10: weitere Details des Schaltglieds, des Riegels und des Verdrehsystems der ersten Ausführungsvariante und des Zusammenwirkens dieser Teile,
- Fig. 11: eine Abfolge der Relativpositionen zwischen Schaltglied, Riegel, Verdrehsystem bei der Verstellung von der verriegelten Mittelstellung zur Startstellung,
- Fig. 12: eine Abfolge der Relativpositionen zwischen Schaltglied, Riegel, Verdrehsystem bei der Verstellung von der Startstellung zur verriegelten Mittelstellung.
Die Figuren 13 bis 16 beziehen sich auf eine zweite Ausführungsvariante der erfindungsgemäßen schaltbaren Kupplung mit Zahnkupplung und Sperrsynchroni-sierung, Hierzu zeigen:

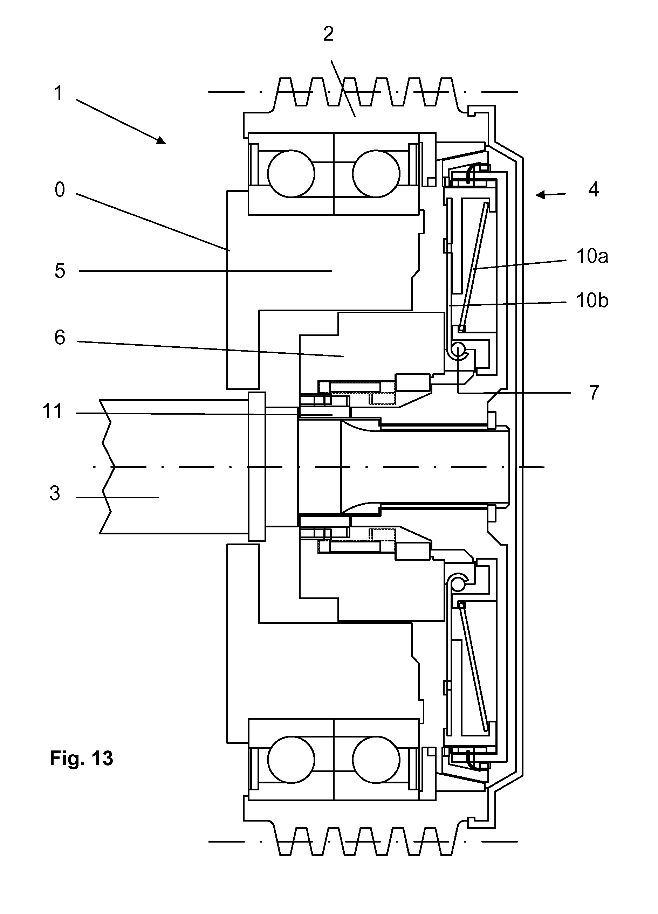

- Fig. 13: einen Vollschnitt durch die zweite Ausführungsvariante zur Kennzeichnung der wichtigsten Bauteile,

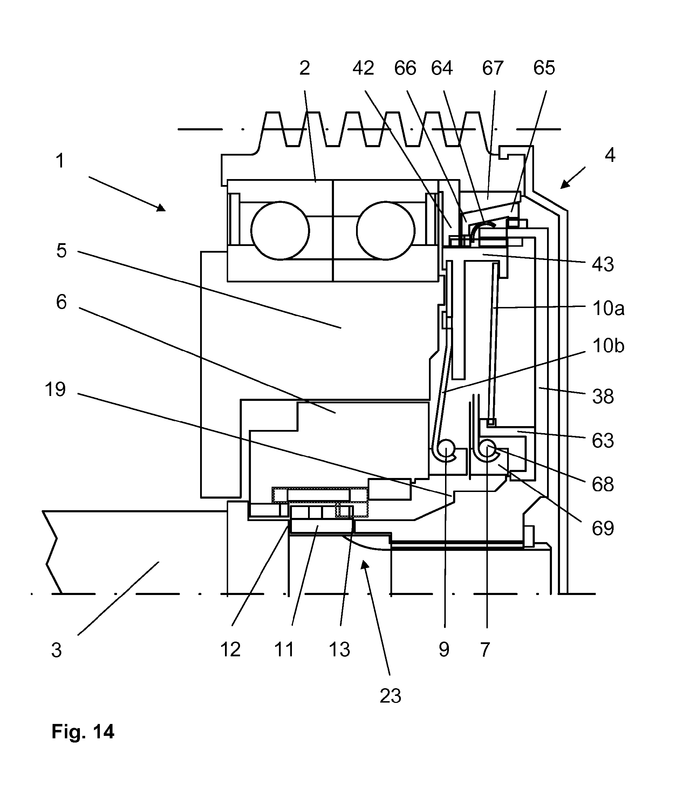

- Fig. 14: weitere Details der zweiten Ausführungsvariante,

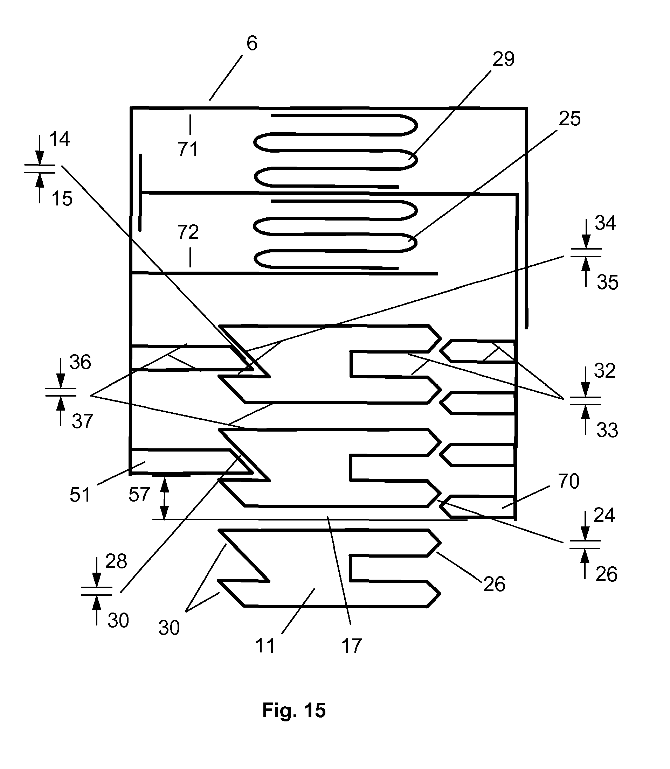

- Fig. 15: eine prinzipielle Darstellung, wie das Schaltglied, der Riegel und das Verdrehsystem der zweiten Ausführungsvariante zusammen wirken,

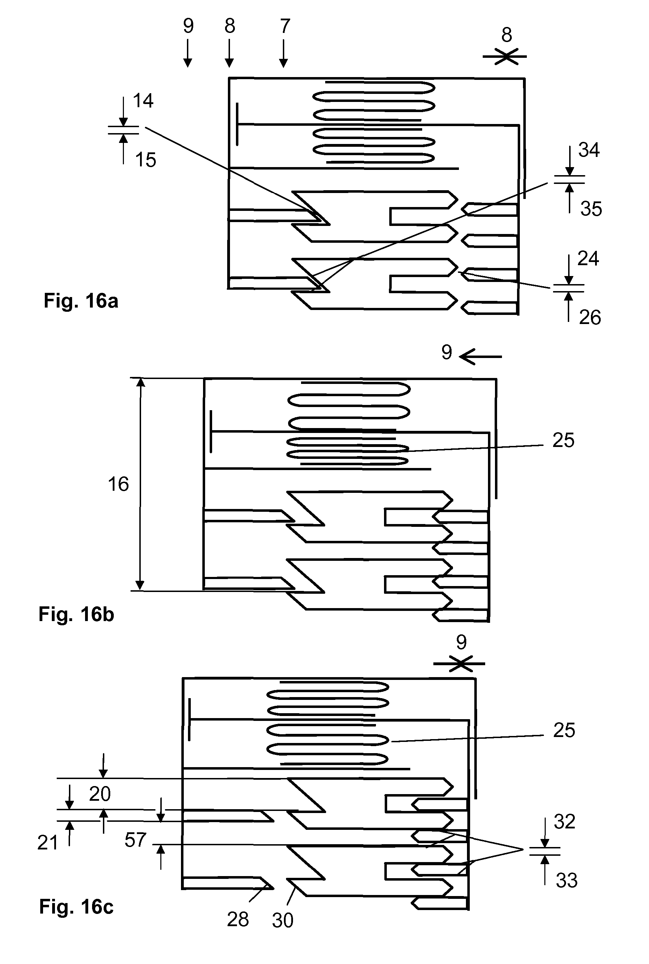

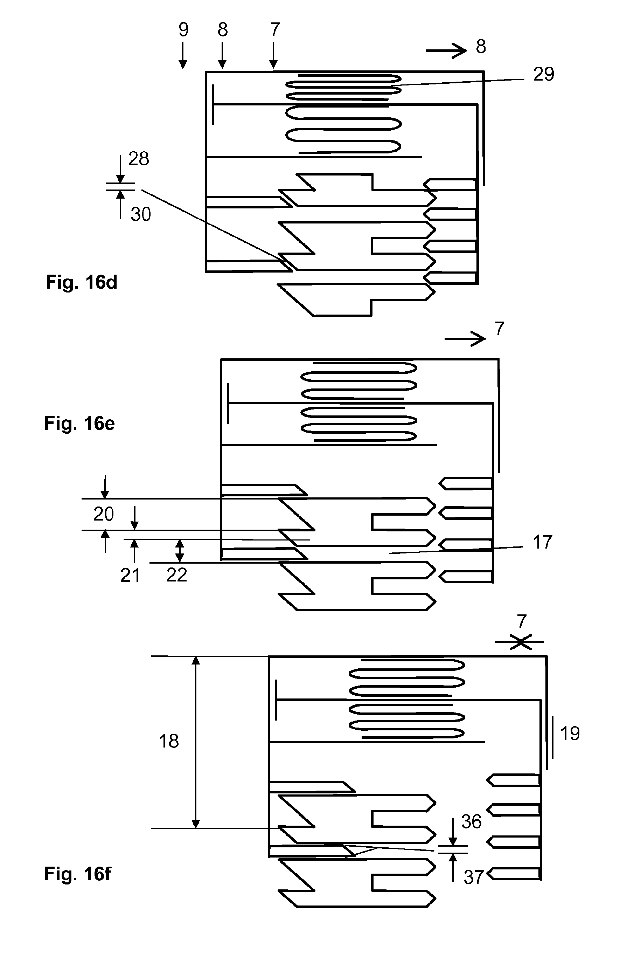

- Fig. 16: eine Abfolge der Relativpositionen zwischen Schaltglied, Riegel und Verdrehsystem bei der Verstellung von der verriegelten Mittelstellung zur Startstellung.

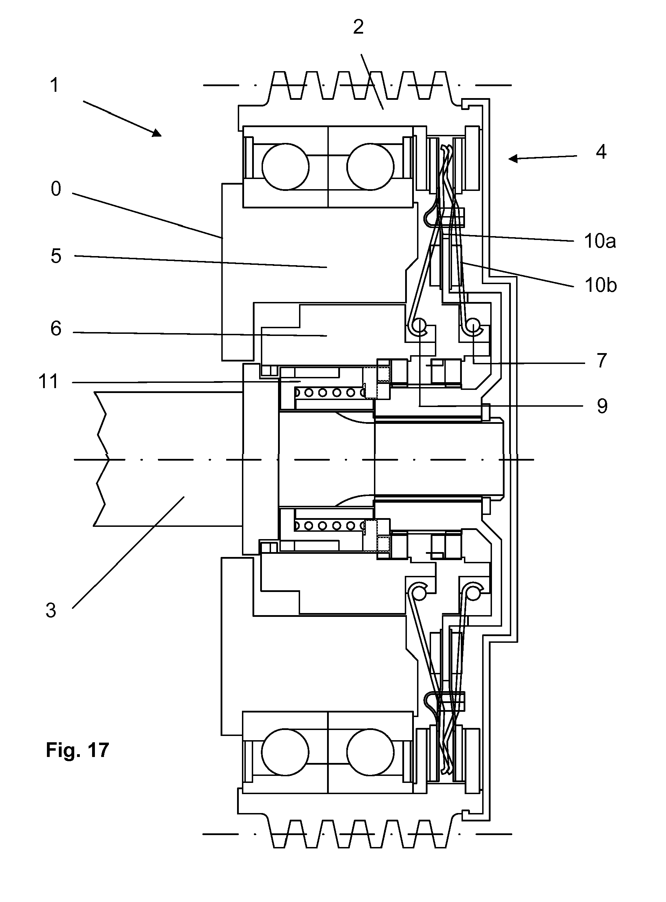

Die Figuren 17 bis 20 beziehen sich auf eine dritte Ausführungsvariante der erfindungsgemäßen schaltbaren Kupplung mit zweiseitig wirkender Reibungskupplung. Hierzu zeigen:
- Fig. 17: einen Vollschnitt durch die dritte Ausführungsvariante zur Kennzeichnung der wichtigsten Bauteile,

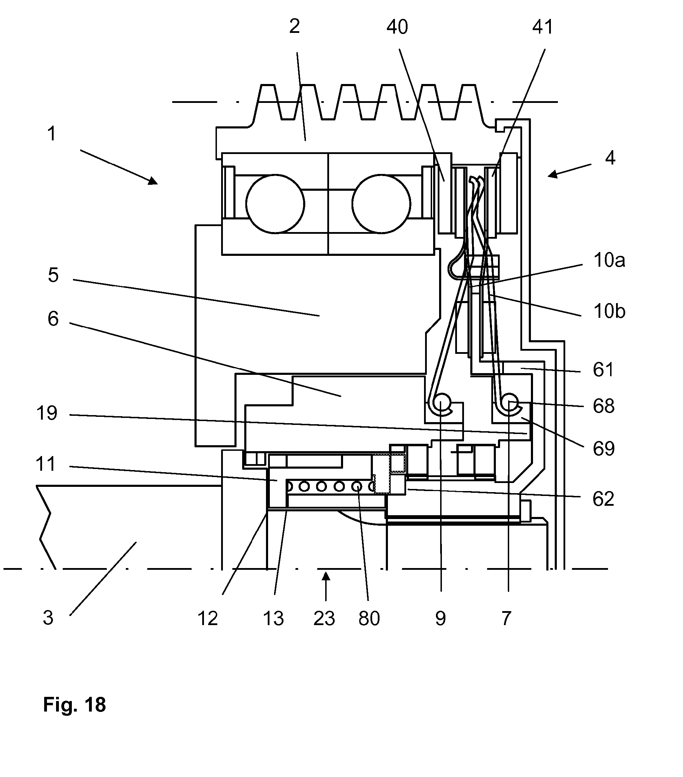

- Fig. 18: weitere Details der dritten Ausführungsvariante,

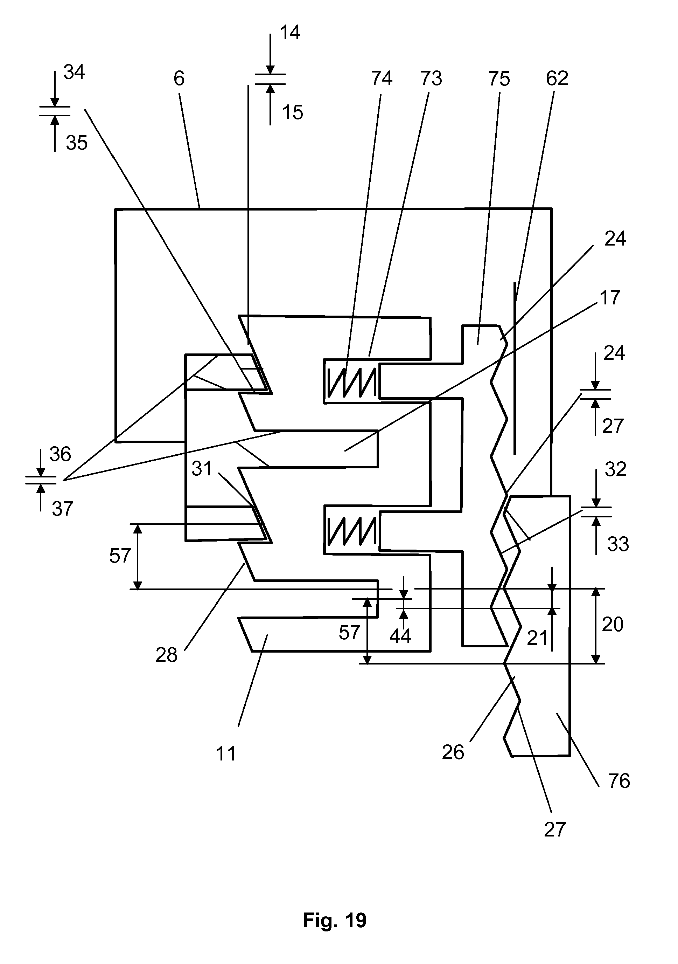

- Fig. 19: eine prinzipielle Darstellung, wie das Schaltglied, der Riegel und das Verdrehsystem der dritten Ausführungsvariante zusammen wirken,

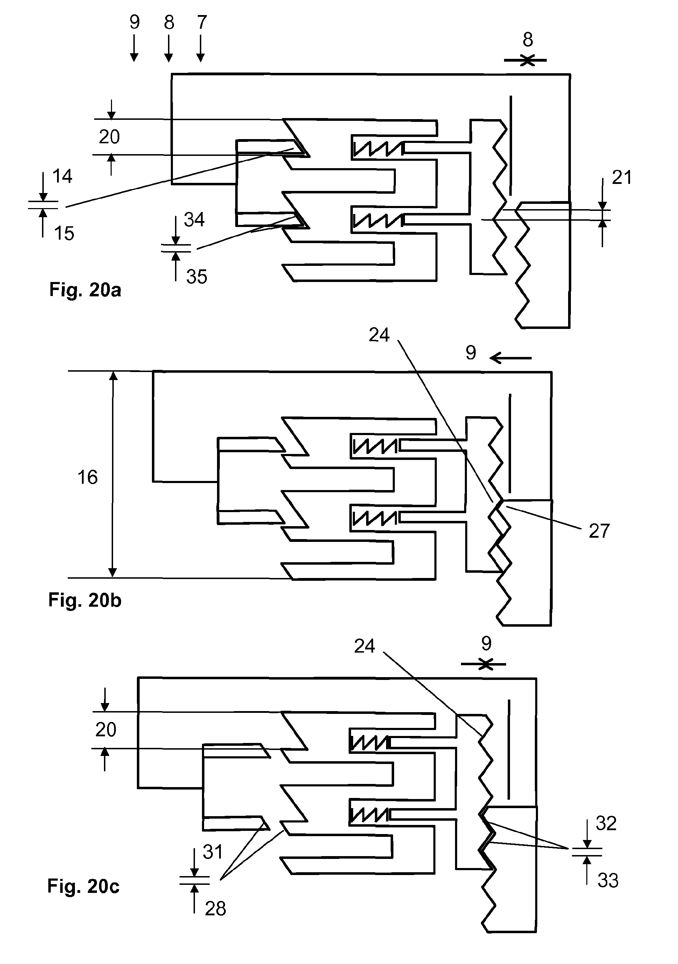

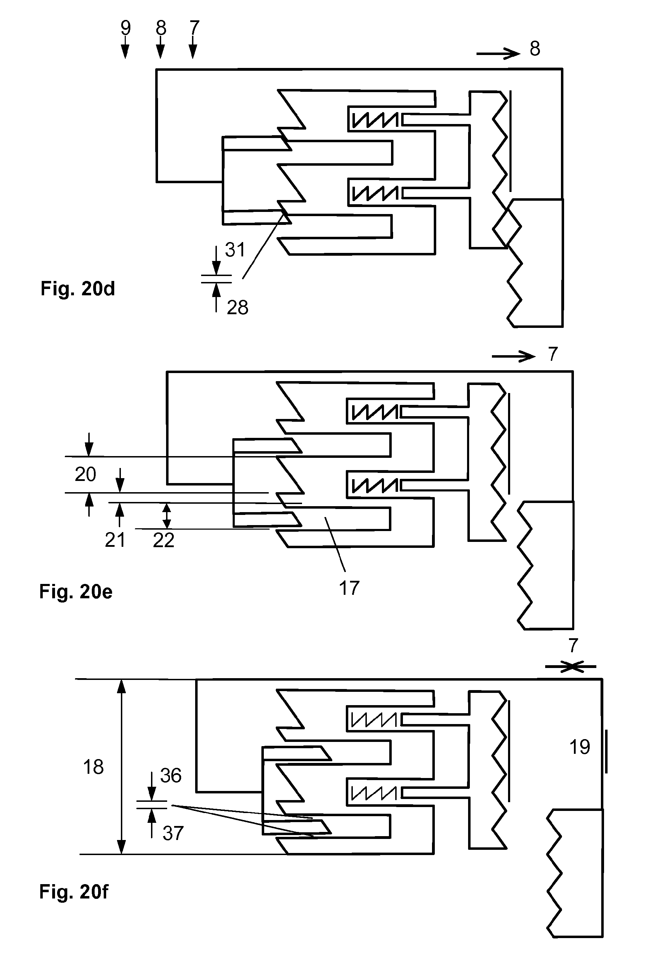

- Fig. 20: eine Abfolge der Relativpositionen zwischen Schaltglied, Riegel und Verdrehsystem bei der Verstellung von der verriegelten Mittelstellung zur Startstellung.

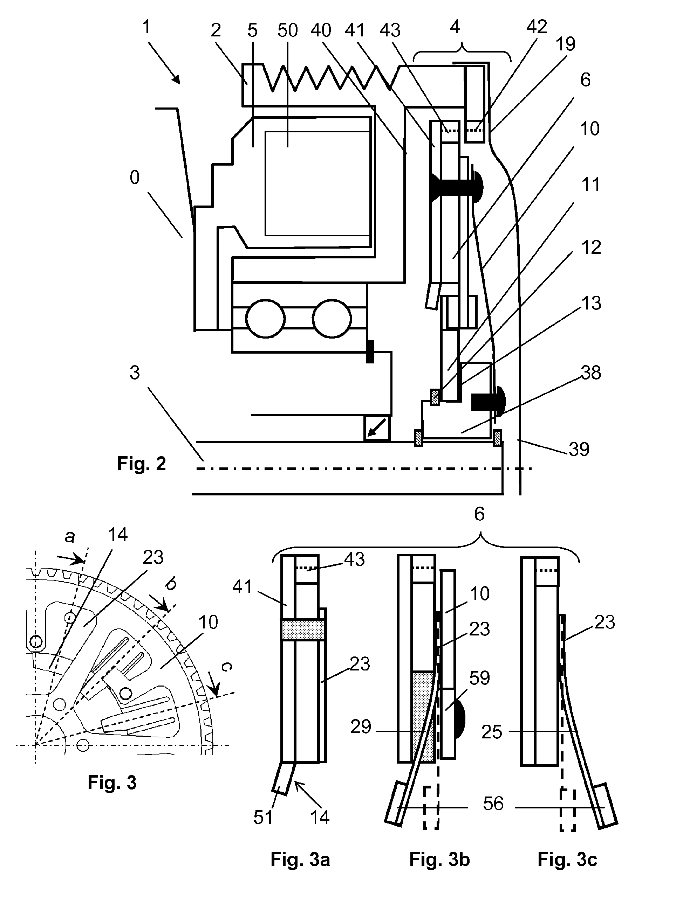

Fig. 1 zeigt ein erstes Ausführungsbeispiel der erfindungsgemäßen schaltbaren Kupplung 1. Sie wirkt hier zwischen einem als Riemenscheibe ausgeführten Antriebselement 2 und einem als Abtriebswelle ausgeführten Abtriebselement 3. Fig. 2 zeigt die gleiche Ausführungsvariante in einer vereinfachten Prinzipdarstellung, um die Anordnung der Bauteile und deren Zusammenwirken klarer zu erläutern.

Diese schaltbare Kupplung 1 kann in dieser Form zum schaltbaren Antrieb z.B. eines Klimakompressors in einem Fahrzeug genutzt werden. Zur Senkung des Kraftstoffverbrauchs soll ein Klimakompressor nur bei Bedarf an den Riementrieb für Nebenaggregate angekoppelt werden können. In vielen Betriebssituationen kann jedoch der Klimakompressor bei geöffneter Kupplung abgeschaltet und stillgesetzt werden. Die schaltbare Kupplung soll dabei so ausgestaltet sein, dass sie nur für die Umschaltungen aktiv mit Hilfsenergie betätigt werden muss, sich danach aber in beiden Schaltzuständen, "Kupplung = offen" und "Kupplung = geschlossen" selbst hält.

Die schaltbare Kupplung 1 beinhaltet einen Elektromagneten 50 als Aktuator 5. Alternativ ist hier auch ein hydraulischer Aktuator möglich, der in die gleiche Kraftrichtung wirkt. Der Aktuator 5 sitzt in einem Gehäuse 0, auf dem das Antriebselement 2 gelagert ist.

Das Kupplungssystem 4 dieser schaltbaren Kupplung beinhaltet auf der einen Seite, in Fig. 2 auf der linken Seite, eine Reibungskupplung zum Ansynchronisieren von Antriebselement 2 und Abtriebselement 3 und auf der anderen Seite, in Fig. 2 auf der rechten Seite, eine Zahnkupplung für die dauerhafte Kopplung von Antriebselement 2 und Abtriebselement 3 ohne weitere Belastungen für den Aktuator. Diese beiden Kupplungsteile sind im Prinzip aus dem Stand der Technik bekannt.

Die Reibungskupplung, auf der linken Seite in Fig. 2, umfasst unter anderem eine fest mit dem Antriebselement 2 verbundene Kupplungslamelle 40 und eine zu dem Schaltglied 6 gehörende Reiblamelle 41. Die Zahnkupplung, auf der rechten Seite in Fig. 2, umfasst eine mit dem Antriebselement 2 fest verbundene Schaltverzahnung 42 und eine mit dem Schaltglied 6 verbundene Kupplungsmuffe 43.

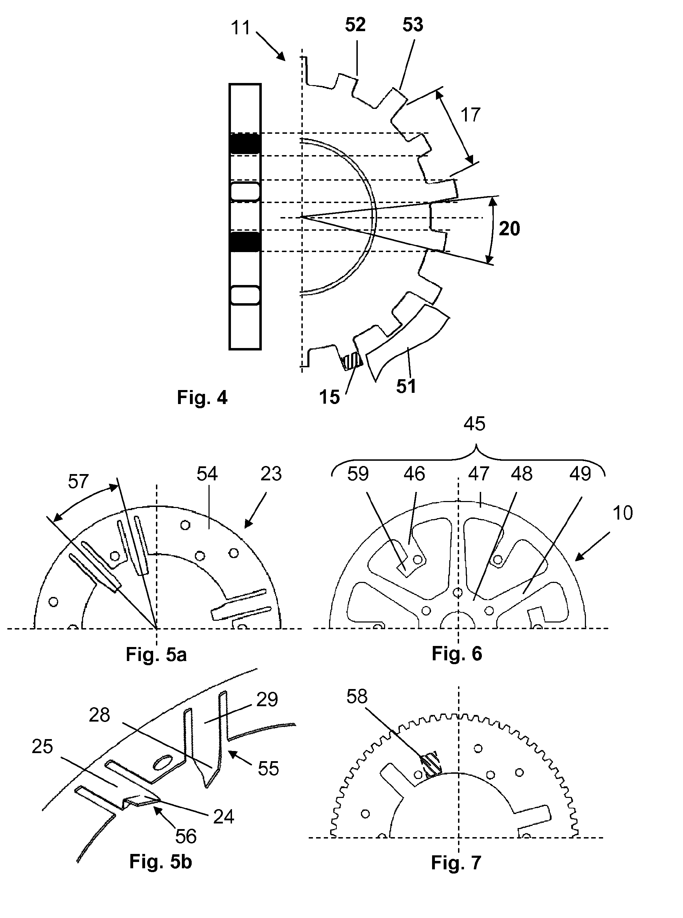

Das aus mehreren fest miteinander verbundenen Einzelteilen bestehende Schaltglied 6 ist innerhalb der schaltbaren Kupplung axial beweglich und kann in allen axialen Positionen Drehmoment auf das Abtriebselement 3 übertragen. Zu diesem Zweck ist, wie in Fig. 2 gezeigt, ein elastisches Betätigungselement 10 vorgesehen, das in dieser Ausführungsvariante, wie in Fig. 6 im Detail dargestellt, aus einem gestanzten Federblech 45 besteht, das an Haltearmen 46, die mit einem äußeren Rand 47 in Verbindung stehen, fest mit dem Schaltglied 6 verbunden ist. Auf einem inneren Rand 48 ist es mit einem Muffenträger 38 verbunden, der über eine Zahnwellenverbindung mit dem Abtriebselement 3 in einem drehfesten Eingriff steht und der in axialer Richtung über Sicherungsringe oder alternativ eine Verschraubung auf dem Abtriebselement 3 gehalten ist. Die beiden Ränder 47 und 48 des Federbleches 45 sind über elastische Speichen 49 miteinander verbunden.

Das elastische Betätigungselement 10 übt auf das Schaltglied 6 eine axiale Kraft, in Fig. 2 nach rechts, aus, die die Kupplungsmuffe 43 in Richtung zum Eingriff mit der Schaltverzahnung 42 drückt. Die Kraft des vorzugsweise magnetischen Aktuators 5 wirkt dem entgegen und zieht die Reiblamelle 41 gegen die Kupplungslamelle 40.

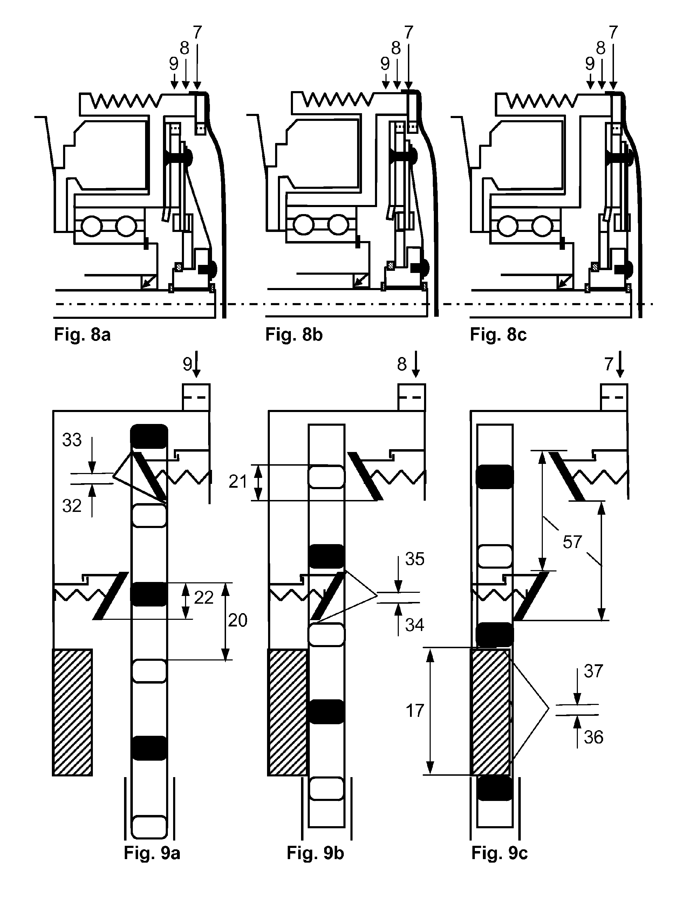

Die Figuren 8a bis 8c zeigen diese schaltbare Kupplung 1 in drei verschiedenen Schaltstellungen 7, 8 und 9, die sich durch die axiale Position des Schaltglieds 6 und den Deformationszustandes des elastischen Betätigungselements 10 unterscheiden. In Fig. 8a wird das Schaltglied 6 durch den Aktuator 5 gegen die axiale Kraft des elastischen Betätigungselements 10 nach links in eine Endstellung 9 gezogen, so dass die Reibungskupplung aktiv ist. In Fig. 8b befindet sich das Schaltglied 6 in einer Mittelstellung 8, bei der weder die Reibungskupplung noch die Zahnkupplung aktiv sind. In Fig. 8c befindet sich das Schaltglied 6 in einer Startstellung 7, bei der die Zahnkupplung geschlossen ist und ein Drehmoment von dem Antriebselement 2 über die Schaltverzahnung 42 und die Kupplungsmuffe 43, das elastische Betätigungs-element 10 und den Muffenträger 38 zum Abtriebselement 3 übertragen wird.

Mit den erfindungsgemäßen Merkmalen der schaltbaren Kupplung 1 wird das Ziel erreicht, durch ein erstes Aktivieren des Aktuators 5 das Schaltglied 6 aus der Mittelstellung 8 in die Endstellung 9 zu bewegen und nach dem Deaktivieren des Aktuators 5 die Rückbewegung des Schaltglieds 6 durch die Axialkraft aus dem elastischen Betätigungselement 10 bis in die Startstellung 7 zu ermöglichen. Bei der nächsten Aktivierung des Aktuators 5 wird das Schaltglied 6 zuerst wieder in die Endstellung 9 bewegt, um danach nach dem Deaktivieren des Aktuators 5 die Bewegung des Schaltglieds 6 wieder in der Mittelstellung 8 zu begrenzen.

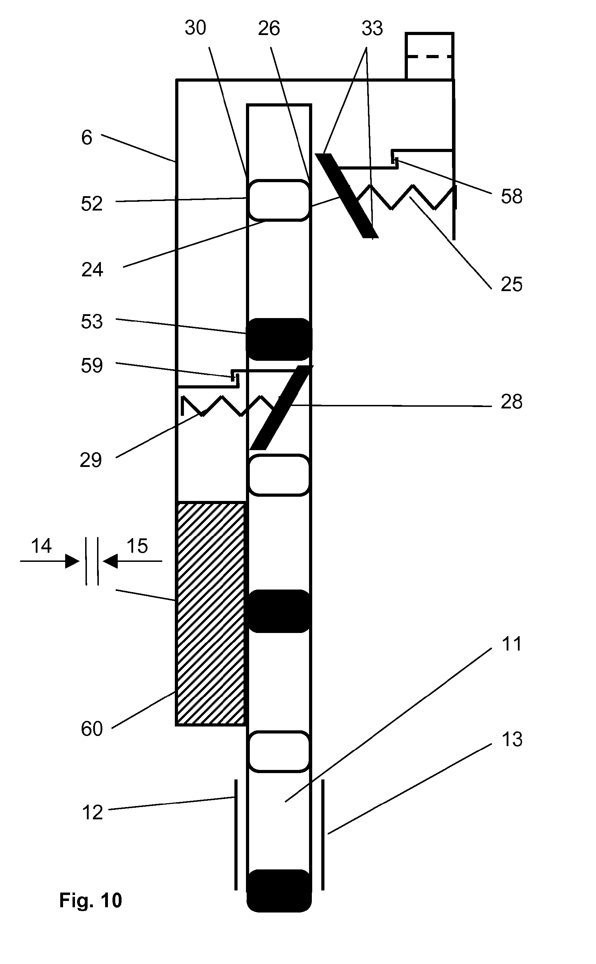

Dazu ist, wie in Fig. 2 zu sehen, ein in Umfangsrichtung verdrehbarer Riegel 11 vorgesehen, der, wie auch in Fig. 10 dargestellt ist, in axialer Richtung durch einen ersten Anschlag 12 und einen zweiten Anschlag 13 auf dem Muffenträger 38 gehalten wird.

Durch die wiederholte axiale Bewegung des Schaltglieds 6 in Folge der Aktivierung des Aktuators 5 und durch ein in dieser Ausführungsvariante mit dem Schaltglied 6 verbundenes Verdrehsystem 23 wird der Riegel in zyklischer Folge in solche Relativpositionen 16 und 18 zum Schaltglied 6 verdreht, dass einmal die axiale Bewegung des Schaltglieds 6 in Folge der Axialkraft aus dem elastischen Betätigungselement 10 in der Mittelstellung 8 begrenzt ist und dass beim nächsten Mal die axiale Bewegung des Schaltglieds 6 bis zur Startstellung 7 möglich ist.

Um das zu erreichen hat der Riegel 11, wie dies in Fig. 4 gezeigt ist, mehrere kurze Riegelzähne 52 und mehrere lange Riegelzähne 53, wobei die kurzen Riegelzähne 52 zu den langen Riegelzähnen 53 um jeweils einen Teilungswinkel 20 versetzt sind. Die langen Riegelzähne 53 stehen in radialer Richtung etwas weiter aus dem Grundkörper des Riegels 11 heraus und bilden stirnseitig je einen Riegelanschlag 15. Gegen diese Riegelanschläge 15 kann das Schaltglied 6 mit Schaltgliedanschlägen 14 anschlagen, um die Bewegung des Schaltglieds 6 in der Mittelstellung 8 zu begrenzen. Wie in der Fig. 3 dargestellt befinden sich diese Schaltgliedanschläge 14 in dieser Ausführungs-variante auf radialen, nach innen weisenden Anschlagszähnen 51 an der mit dem Schaltglied 6 verbundenen Reiblamelle 41.

In den Fig. 3, 5 und 10 sind die Einzelheiten des in dieser Ausführungsvariante mit dem Schaltglied 6 verbundenen Verdrehsystems 23 dargestellt. Das Hauptelement des Verdrehsystems 23 ist ein in den Fig. 5a und 5b dargestellter elastischer Verdreher 54 mit mehreren damit verbundenen Federzungen 55 als federnde Verdrehelemente 25 und 29 sowie mit angeschrägten Endstücken 56 als Träger der Wirkflächen 24 und 28 des Verdrehsystems 23. Die Federzungen 55 für die federnden Verdrehelemente 25 mit den schrägen Wirkflächen 24 sind zu den Federzungen 55 für die federnden Verdrehelemente 29 mit den schrägen Wirkflächen 28 um einen Teilungswinkel der Wirkflächen 57 in Umfangsrichtung zu einander versetzt angeordnet. Die angeschrägten Endstücke 56 mit den Wirkflächen 24 des Verdrehsystems 23 und die angeschrägten Endstücke 56 mit den Wirkflächen 28 des Verdrehsystems 23 sind zur Hauptebene des Verdrehers 54 in entgegengesetzter Richtung geneigt.

Aus den Fig. 9 bis 12 wird das Zusammenwirken des mit dem Schaltglied 6 verbundenen Verdrehsystems 23 mit dem Riegel 11 deutlich. In diesen Figuren ist das Schaltglied 6 samt dem damit verbundenen elastischen Verdreher 54 mit seinen Federzungen 55 und Endstücken 56 funktional dargestellt, und zwar als U-förmiges Teil mit daran angebundenen federnden Verdrehelementen 25 und 29 sowie den Wirkflächen des Verdrehsystems 24 und 28. Der Riegel 11 ist zwischen den axialen Anschlägen 12 und 13 geführt. Auf dem Riegel sind die Riegelzähne 52 und 53 mit ihren unterschiedlichen Zahnlängen als jeweils umrissene und gefüllte Elemente, wie auch in Fig. 4 dargestellt, zu erkennen.

In den Fig. 9b und 10 befindet sich das Schaltglied 6 mit dem Verdrehsystem 23 in der Mittelstellung 8. Das Schaltglied 6 drückt mit seinem Schaltgliedanschlag 14 vor den Riegelanschlag 15 an einem langen Riegelzahn 53 und verhindert so ein Ausrücken des Schaltglieds 6 in die Startstellung 7. Die federnden Verdrehelemente 29 mit den schrägen Wirkflächen 28 sind in Riegelnuten zwischen zwei Riegelzähnen 52 und 53 kraftfrei eingerückt. Diese Riegelzähne bilden hier zweite formschlüssige Sicherungselemente 34 am Riegel, die in dieser Stellung mit zweiten formschlüssigen Sicherungselementen 35 am Schaltglied in Eingriff stehen, die in dieser Ausführungsvariante von den Stirnflächen der schrägen Endstücke für die Wirkflächen 28 gebildet werden. Die federnden Verdrehelemente 25 mit den schrägen Wirkflächen 24 liegen von der anderen Seite kraftfrei außerhalb des Riegels 11, hier vor einem kurzen Riegelzahn 52.

Die Figuren 9a bzw. 9c zeigen die Eingriffssituationen zwischen dem Schaltglied 6 mit Verdrehsystem 23 und dem Riegel 11 in der Endstellung 9 des Schaltglieds 6 bzw. in der Startstellung 7 des Schaltglieds.

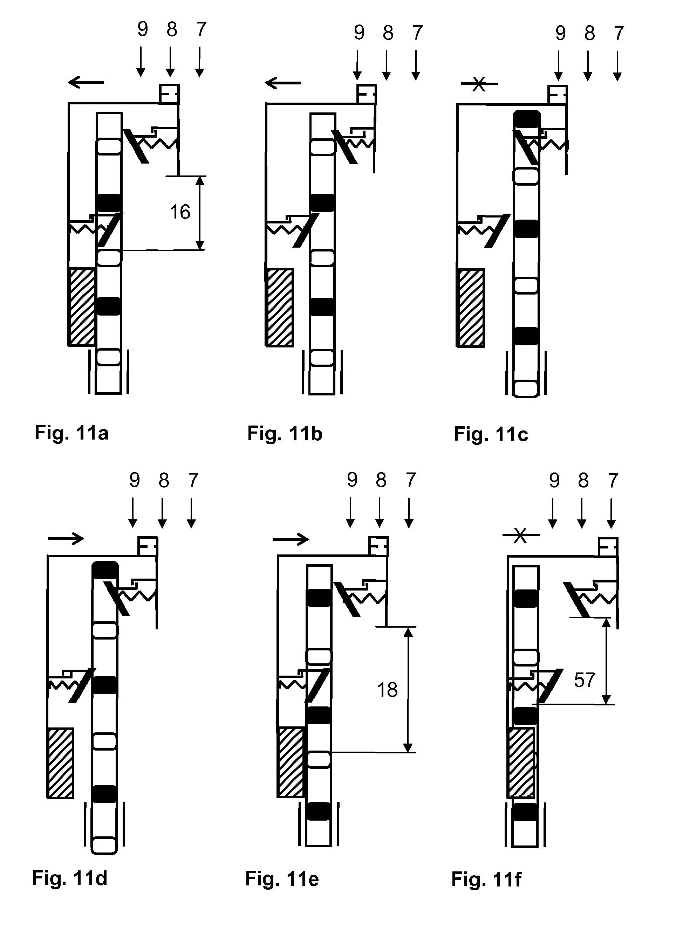

Die Fig. 11a bis 11f zeigen die Abfolge der Relativpositionen zwischen dem Schaltglied 6 mit Verdrehsystem 23 und dem Riegel 11 zwischen seinen axialen Anschlägen. In Fig. 11a befindet sich das Schaltglied 6 in der Schaltmittelstellung 8, genauso wie in den Fig. 9b und 10. Durch Aktivierung des Aktuators 5 wird das Schaltglied 6 entgegen der Kraft aus dem elastischen Betätigungselement 10 nach links bewegt bis in Fig. 11b die schrägen Wirkflächen 24 an den federnden Verdrehelementen 25 auf Riegelzähne, hier kurze Riegelzähne 52 treffen. Die federnden Verdrehelemente 29 mit den schrägen Wirkflächen 28 befinden sich dann immer noch als zweite formschlüssige Sicherungselemente 35 des Schaltglieds 6 im Eingriff mit den durch die beiden benachbarten Riegelzähne gebildeten zweiten formschlüssigen Sicherungselementen 34 am Riegel, und zwar so, dass die Kräfte von den schrägen Wirkflächen 24 auf erste schräge Formelemente 26 am Riegel 11, hier die Kanten an kurzen Riegelzähne 52, den Riegel noch nicht in Umfangsrichtung, in Fig. 11 nach unten, verdrehen können.

Bei weiterem Verschieben des Schaltglieds 6 in Richtung Schaltendstellung 9 werden die federnden Verdrehelemente 25 weiter belastet. Dadurch steigt auch die seitliche Kraft auf die zweiten formschlüssigen Sicherungselemente 34 und 35. Um die damit in Verbindung stehenden Federzungen (zweite federnde Verdrehelemente 29 und zweite Wirkflächen 28) gegen die Reibkraft im Kontakt mit den Riegelzähnen heraus bewegen zu können, werden diese Federzungen durch einen axialen Anschlag 59 an den Federblechen 45 an einem weiteren Ausfedern gehindert. Aus Fig. 6 geht hervor, wie die axialen Anschläge 59 für diese Federzungen (29 und 28) durch Ausstanzungen aus dem Federblech 45 für das elastische Betätigungselement 10 gewonnen werden.

In Fig. 11c und 9a ist das Schaltglied 6 durch die Kraft aus dem Aktuator 5 bis in die Endstellung 9 bewegt worden. Dabei sind die federnden Verdrehelemente 29 samt der schrägen Wirkflächen 28 komplett aus dem Riegel 11 herauszogen worden. Die Kräfte an den zuvor vorgespannten federnden Verdrehelementen 25 können nun über die schrägen Wirkflächen 24 so auf die schrägen Formelemente 26 am Riegel, hier an den kurzen Riegelzähne 52, einwirken, dass der Riegel in Umfangsrichtung, in Fig. 11c nach unten, um einen ersten Teilwinkel 21 verdreht wird. Dadurch können die federnden Verdrehelemente 25 samt Wirkflächen 24 komplett zwischen zwei Riegelzähne 52 und 53 einfahren. Die Stirnseiten der schrägen Endstücke für die Wirkflächen 24 bilden hier die ersten formschlüssigen Sicherungselemente 33 am Schaltglied 6 und die Riegelzähne bilden zweite formschlüssigen Sicherungselemente 32 am Riegel, die in dieser axialen Relativstellung so ineinander eingriffen, dass sich der Riegel 11 nicht weiter in Umfangsrichtung verschieben lässt.

Die geometrische Bedingung für den korrekten Kontakt zwischen den Wirkflächen 24 des mit dem Schaltglied 6 verbundenen Verdrehsystems 23 und den schrägen Formelementen 26 am Riegel in dieser Ausführungsvariante ist, dass der Teilungswinkel 57 zwischen den ersten formschlüssigen Sicherungselementen 33 und den zweiten formschlüssigen Sicherungselementen 35 am Schaltglied 6 plus dem ersten Teilwinkel 21 oder minus dem zweiten Teilwinkel 22 ein ganzzahliges Vielfaches des Teilungswinkels 20 zwischen den Relativpositionen 16 und 18 ist. Dabei ist hier zu berücksichtigen, dass der Versatzwinkel 44 zwischen den ersten formschlüssigen Sicherungselementen 32 und den zweiten formschlüssigen Sicherungselementen 34 am Riegel 11 Null ist, da diese von koaxialen Nuten im Riegel gebildet werden.

Wird nun der Aktuator 5 deaktiviert, so wirkt auf das Schaltglied 6 in axialer Richtung nur die Kraft aus dem elastischen Betätigungselement 10, um das Schaltglied 6 in Richtung zur Startstellung 7 zu bewegen. In Fig. 11d ist dargestellt, dass dabei die zuvor entspannten ersten federnden Verdrehelemente 25 durch einen axialen Anschlag 58 an der Kupplungsmuffe 43 ohne weitere Ausfederung aus dem Riegel 11 herausgezogen werden können. Dieser Anschlag 58 ist, wie in Fig. 7 dargestellt, eine Anschlagsfläche auf der Kupplungsmuffe 43.

Die zweiten Wirkflächen 28 des Verdrehsystems 23, die mit den zweiten federnden Verdrehelemente 29 verbunden sind, kommen bei dieser Bewegung des Schaltglieds 6 in Kontakt mit zweiten schrägen Formelementen 30 am Riegel, hier an den langen Riegelzähnen 53 des Riegels, und werden dabei vorgespannt. Um den federnden Verdrehelementen ausreichend Federweg zu ermöglichen, hat die in dieser Ausführungsvariante hier angrenzende Kupplungsmuffe örtliche Aussparungen, die in den Fig. 3b und 7 zu erkennen sind.

Die federnden Verdrehelemente 25 mit den schrägen Wirkflächen 24 und den dadurch gebildeten ersten formschlüssigen Sicherungselementen 33 am Schaltglied befinden sich dann aber immer noch im seitlichen Kontakt mit den ersten formschlüssigen Sicherungselementen 32 am Riegel 11, und zwar so, dass die Kräfte von den schrägen Wirkflächen 28 auf die schrägen Formelemente 30 am Riegel 11 den Riegel noch nicht in Umfangsrichtung, in Fig. 11d nach unten, verdrehen können. Bei weiterem Verschieben des Schaltglieds 6 in Richtung Schaltstartstellung 7 werden die federnden Verdrehelemente 29 weiter belastet. Dadurch steigt auch die seitliche Kraft auf die ersten formschlüssigen Sicherungselemente 32 und 33.

Sobald, wie in Fig. 11e gezeigt, die Federzungen mit den schrägen Endstücken für die Wirkflächen 24 und die zweiten formschlüssigen Sicherungselemente am Schaltglied 35 komplett aus dem Riegel 11 ausgerückt sind, kann die Kraft von den schrägen Wirkflächen 28 auf die zweiten schrägen Formelemente 30 am Riegel 11, hier an den langen Riegelzähnen 53, den Riegel 11 in Umfangsrichtung, in Fig. 11e nach unten, weiter um einen zweiten Teilwinkel 22 verdrehen, bis die schrägen Endstücke mit den Wirkflächen 28 und ersten formschlüssigen Sicherungselemente 33 wieder komplett in die Riegelnuten zwischen zwei Riegelzähne eingefahren sind. In dieser Relativstellung 18 zwischen dem Schaltglied 6 und dem Riegel 11 trifft nun das Schaltglied 6 mit seinem Schaltgliedanschlag 14 auf dem Anschlagszahn 51 nicht auf einen Riegelanschlag 15 an einem langen Riegelzahn 53, sondern es überfährt die kurzen Riegelzähne 52 und durchfährt eine von zwei benachbarten langen Riegelzähnen gebildete Riegelnut 17 (siehe Fig. 4), so dass das Schaltglied 6 von dem elastischen Betätigungselement 10 bis in die Startstellung 7 gezogen werden kann. Dabei kommen die schrägen Endstücke mit den Wirkflächen 28 und ersten formschlüssigen Sicherungselemente 33 wieder außer Eingriff mit dem Riegel 11. Um ein ungewolltes weiteres Verdrehen des Riegels 11 in Umfangsrichtung gegenüber dem Schaltglied 6 zu vermeiden, hat das Schaltglied 6 dritte formschlüssige Sicherungselemente 37, hier in Form einer Sicherungslasche 60 am mit dem Schaltglied 6 verbundenen Verdrehsystem 23, die in diesem Schaltzustand zwischen zwei lange Riegelzähne 53 eingreift, die hier dritte formschlüssige Sicherungselemente 36 am Riegel bilden. Alternativ zu der Sicherungslasche 60 könnte auch eine Haltegabel einen der Riegelzähne umfassen.

In der Startstellung 7 wird die Bewegung des Schaltglieds 6 durch einen, in Fig. 2 gezeigten, Anschlag 19 begrenzt, der in dieser Ausführungsvariante auf einem Deckelblech 39 sitzt, das die schaltbare Kupplung 1 verschließt und schützt.

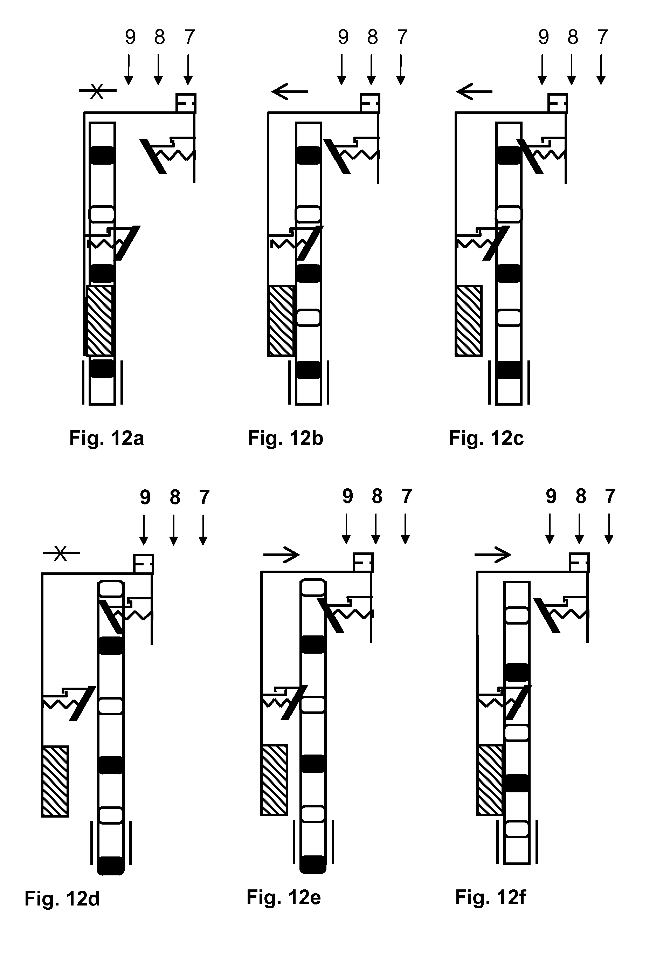

Die Fig. 12a bis 12f zeigen die Abfolge von Schaltstellungen, wenn das Schaltglied 6 durch Aktivierung des Aktuators 5 wieder von der Startstellung 7 in die Endstellung 9 bewegt wird. Dabei wird der Riegel 11 um einen ersten Teilwinkel 21 verdreht. Nach dem Deaktivieren des Aktuators wirkt wiederum nur noch die Kraft des elastischen Betätigungselements 10 in axialer Richtung auf das Schaltglied 6 und zieht dieses wieder in Richtung Startstellung 7. Dabei wird der Riegel 11 noch weiter um einen zweiten Teilwinkel 22 verdreht, so dass das Schaltglied 6 mit den Schaltglied-anschlägen 14 auf den Anschlagszähnen 51 wieder vor die Riegelanschläge 15 an den langen Riegelzähnen 53 stößt. Dadurch wird die Bewegung des Schaltglieds 6 wieder in der Mittelstellung 8 begrenzt.

Fig. 13 zeigt ein zweites Ausführungsbeispiel der erfindungsgemäßen schaltbaren Kupplung 1. Sie wirkt hier ebenfalls zwischen einem als Riemenscheibe ausgeführten Antriebselement 2 und einem als Abtriebswelle ausgeführten Abtriebselement 3. Fig. 14 zeigt weitere Details dieser Ausführungsvariante.

Die schaltbare Kupplung 1 hat wieder einen Aktuator 5, vorzugsweise einen Elektromagneten 50. Alternativ ist hier auch ein hydraulischer Aktuator möglich. Der Aktuator sitzt wieder in einem Gehäuse 0, auf dem auch wieder das Antriebselement 2 gelagert ist. Das Kupplungssystem 4 dieser schaltbaren Kupplung beinhaltet eine Zahnkupplung mit Sperrsynchronisierung, wie sie im Prinzip von Pkw-Handschaltgetrieben her bekannt ist. In Fig. 13 ist das Kupplungssystem in der Schaltstellung "Kupplung = offen" dargestellt. Dabei befindet sich das Schaltglied 6 dieser Ausführungsvariante in der Startstellung 7. Um die Kupplung in der in Fig. 13 gezeigten Startstellung 7 zu halten, hat die Kupplung ein erstes elastisches Betätigungselement 10a in Form einer geschlitzten Tellerfeder, das, wie in Fig. 14 gezeigt, die Kupplungsmuffe 43 gegen den Muffenträger 38 drückt und sich dabei an einer Federstütze 63 abstützt. Der Muffenträger 38 steht über eine Zahnwellenverbindung mit dem Abtriebselement 3 in Eingriff und ist in axialer Richtung über einen Sprengring (alternativ eine Verschraubung) gehalten. An der Kupplungsmuffe 43 ist ein zweites elastisches Betätigungselement 10b, ebenfalls in Form einer geschlitzten Tellerfeder, mit Vorspannung befestigt. Dieses zweite elastische Betätigungselement 10b greift mit seinen geschlitzten Enden in einen Haltering 68, der in Nuten mehrerer Haltenasen 69 am Schaltglied 6 eingeschnappt ist. Das Schaltglied 6 ragt in den Innendurchmesser des Aktuators 5 hinein. Wird der Aktuator 5 aktiviert, so wird das Schaltglied 6 in den Fig. 13 und 14 nach links bewegt und spannt dabei die elastischen Betätigungselemente 10a und 10b.

Fig. 14 zeigt die obere Hälfte der schaltbaren Kupplung in der Endstellung 9. Zur Verdeutlichung der Funktionsweise ist die Verbindungsstelle zwischen dem zweiten elastischen Betätigungselement 10b und dem Schaltglied 6 auch noch einmal in der Startstellung 7 dargestellt. In der Startstellung 7 ist das erste elastische Betätigungselement 10a maximal entspannt und das zweite elastische Betätigungselement 10b liegt vorgespannt an der Kupplungsmuffe 43 an. Diese Ausführungsvariante der erfindungsgemäßen Kupplung ist dann im Schaltzustand "Kupplung = offen". Durch Aktivierung des Aktuators 5 wird das Schaltglied 6 nach links bewegt bis in die Schaltendstellung 9. Auf dem Weg von der Startstellung 7 zur Endstellung 9 wird zuerst das erste elastische Betätigungselement 10a deformiert, da das zweite elastische Betätigungselement 10b bis zum Erreichen der Vorspannkraft an der Kupplungsmuffe 43 anliegt. Die Kupplungsmuffe 43 wird dabei nach links bewegt. Dabei nimmt sie über z.B. drei am Umfang der Kupplungsmuffe 43 verteilte Federbleche 64 den Synchronring 65 mit der Sperrverzahnung 66 mit. Sobald der Synchronring 65 einen Reibkonus 67 am Antriebselement 2 berührt, verdreht der Synchronring 65 um wenige Winkelgrade innerhalb des Spiels, das ihm eine entsprechende Nut im Muffenträger 38 ermöglicht, und kommt in Sperrstellung. In dieser Sperrstellung wirkt die Betätigungskraft vom Schaltglied 6 über die elastischen Betätigungselemente 10a, 10b und die Kupplungsmuffe 43 und drückt diese vor den Synchronring 65 und diesen gegen den Reibkonus 67. Daraus entsteht ein Synchronisationsdrehmoment, das die abtriebsseitigen Bauteile an die Drehzahl der antriebsseitigen Bauteile ansynchronisiert. Sobald synchrone Drehzahlen von Reibkonus 67 und Synchronring 65 erreicht sind, verschwindet das Synchronisationsdrehmoment zwischen diesen Bauteilen. Die Kupplungsmuffe 43 kann nun über die angeschrägte Sperrverzahnung 66 den Synchronring 65 ein wenig zurück verdrehen und durch die Sperrverzahnung 66 hindurchgleiten. Danach trifft sie auf die mit gleicher Drehzahl drehende Schaltverzahnung 42 und greift in diese ein. Das Schaltglied 6 befindet sich dann in der Mittelstellung 8.

Nach dem Einriegeln der Kupplungsmuffe 43 in die Schaltverzahnung 42 wird das Schaltglied 6 noch weiter nach links bis in die Endstellung 9 bewegt. Die dazu nötige Betätigungskraft ist größer als die Vorspannkraft des zweiten elastischen Betätigungselements 10b. Das führt zu einer elastischen Deformation dieses zweiten elastischen Betätigungselements 10b und damit zu einer Energiespeicherung in dieses Element.

Während seiner axialen Bewegung steht das Schaltglied 6 in einem komplexen Eingriff mit einem Riegel 11, der sich aber nicht in axialer Richtung verlagern kann, da er mit geringem Spiel zwischen zwei axialen Anschlägen 12 und 13 sitzt.

Fig. 15 verdeutlicht die prinzipielle Anordnung von Schaltglied 6, Riegel 11 und Verdrehsystems 23, das in dieser Ausführungsvariante elastisch mit dem Schaltglied 6 verbunden ist. Das Schaltglied 6 hat mindestens eine durch einen ersten Anschlag 71 und einen zweiten Anschlag 72 in Umfangsrichtung orientierte Führungsnut. Diese Anschläge begrenzen den Bewegungsraum eines Zahnringes 70 des Verdrehsystems 23. Der Zahnring 70 wird über die elastischen Federelemente 25 und 29 innerhalb der Anschläge 71 und 72 geführt.

Die Fig. 16a bis 16f zeigen die Abfolge der Relativpositionen zwischen dem Schaltglied 6 mit Verdrehsystem 23 und dem Riegel 11 zwischen seinen axialen Anschlägen.

In Fig. 16a, wie auch in Fig. 15, befindet sich das Schaltglied 6 zum Riegel 11 in einer ersten Relativposition 16 in Umfangsrichtung. Das Schaltglied 6 kann in dieser Relativposition nur bis zu einer Mittelstellung 8 in den Riegel 11 einrücken, bei der diese Ausführungsvariante der schaltbaren Kupplung im Zustand "Kupplung = geschlossen" ist. In der Mittelstellung 8 trifft das Schaltglied 6 mit einem Schaltgliedanschlag 14 auf einen Riegelanschlag 15 am Riegel. Der Riegel 11 hat zweite formschlüssige Sicherungselemente 34, die in dieser Mittelstellung 8 mit zweiten formschlüssigen Sicherungselementen 35 am Schaltglied 6 in Eingriff stehen. Der Riegelanschlag 15 und die zweiten formschlüssigen Sicherungselemente 34 am Riegel 11 werden zum Teil von den gleichen Wirkflächen am Riegel 11 gebildet. Ebenso werden auch der Schaltgliedanschlag 14 und die zweiten formschlüssigen Sicherungselemente 35 am Schaltglied 6 zum Teil von den gleichen Wirkflächen am Schaltglied 6 gebildet. Bewegt nun der Aktuator 5 das Schaltglied 6 relativ zum Riegel in Richtung Endstellung 9, in den Fig. 16 nach links, so treffen erste Wirkflächen 24 des mit dem Schaltglied 6 elastisch verbundenen Verdrehsystems 23 auf erste schräge Formelemente 26 am Riegel 11 und spannen erste federnde Verdrehelemente 25 vor. Das Schaltglied 6 kann sich aber noch nicht gegenüber dem Riegel 11 verdrehen, da noch immer zweite formschlüssige Sicherungselemente 34 am Riegel im Eingriff stehen mit zweiten formschlüssigen Sicherungselementen 35 am Schaltglied.

Erst wenn, wie in Fig. 16c dargestellt, diese zweiten Sicherungselemente in der Endstellung 9 außer Eingriff kommen, kann sich das erste federnde Verdrehelement 25 entspannen und dabei den Riegel 11 gegenüber dem Schaltglied 6 um einen ersten Teilwinkel 21 verdrehen. Nach der Verdrehung um diesen ersten Teilwinkel 21 verhindern erste formschlüssige Sicherungselemente 32 am Riegel, die dann mit ersten formschlüssigen Sicherungselementen 33 am Schaltglied in Eingriff stehen, eine weitere ungewollte Verdrehung. Die geometrische Bedingung für den korrekten Kontakt zwischen den Wirkflächen 24 des mit dem Schaltglied 6 verbundenen Verdrehsystems 23 und den schrägen Formelementen 26 am Riegel ist auch in dieser Ausführungsvariante, dass der Teilungswinkel 57 zwischen den ersten formschlüssigen Sicherungselementen 33 und den zweiten formschlüssigen Sicherungselementen 35 am Schaltglied 6 plus dem ersten Teilwinkel 21 oder minus dem zweiten Teilwinkel 22 wieder ein ganzzahliges Vielfaches des Teilungswinkels 20 zwischen den Relativpositionen 16 und 18 ist. Dabei ist auch hier zu berücksichtigen, dass der Versatzwinkel 44 zwischen den ersten formschlüssigen Sicherungselementen 32 und den zweiten formschlüssigen Sicherungselementen 34 am Riegel 11 Null ist, da diese von koaxialen Nuten im Riegel gebildet werden.

Nach der Verdrehung um den ersten Teilwinkel 21 stehen das Schaltglied 6 und der Riegel 11 in so einer Relativposition, dass nach der Deaktivierung der Aktuators 5 und in Folge der Kräfte aus den elastischen Betätigungselementen 10a und 10b das Schaltglied 6 mit zweiten Wirkflächen 28 des Verdrehsystems 23 auf zweite schräge Formelemente 30 am Riegel 11 trifft. Bei weiterer axialer Bewegung des Schaltglieds 6 in Richtung Startstellung 7 werden zweite federnde Verdrehelemente 29 vorgespannt und der Riegel 11 zum Schaltglied 6 um einen zweiten Teilwinkel 22 verdreht, bis das Schaltglied 6 mit zuerst zweiten 35 und danach dritten formschlüssigen Sicherungselementen 37 in zuerst zweite 34 und danach dritte formschlüssige Sicherungselemente 36 am Riegel 11 eingreift. In dieser Ausführungsvariante werden die zweiten und dritten Sicherungselemente am Riegel und am Schaltglied von den gleichen Wirkflächen gebildet. Diese Unterscheidung ist nur im Vergleich mit der ersten Ausführungsvariante nötig.

Das Schaltglied 6 und der Riegel 11 bleiben in dieser zweiten Relativposition 18 bis das Schaltglied 6 in der Startstellung 7 auf einen Anschlag 19 für das Schaltglied in Startstellung 7 trifft. Dieser Anschlag 19 ist in dieser Ausführungsvariante als Anschlag am axial in der schaltbaren Kupplung 1 fixierten Muffenträger 38 ausgeführt. Die dritten formschlüssigen Sicherungselemente am Riegel 36 am Riegel bilden hier gleichzeitig die Riegelnut 17, durch die hindurch das Schaltglied 6 mit all seinen Formelementen bis in die Startstellung 7 hindurchgleiten kann. In dieser Startstellung 7 ist die schaltbare Kupplung in dieser Ausführungsvariante in der Schaltstellung "Kupplung = offen". In der Startstellung 7 ist das Verdrehsystem 23 mit seinen Wirkflächen 24 wieder aus dem Riegel 11 ausgerückt. Die zweiten federnden Verdrehelemente 29 entspannen und das Verdrehsystem 23 kommt wieder in eine Relativposition zum Riegel 11, bei der wieder, bei einer Bewegung des Schaltglieds 6 in Richtung Endstellung 9, erste Wirkflächen 24 des Verdrehsystems auf erste schräge Formelemente 26 am Riegel treffen.

Bei der durch Aktivierung des Aktuators 5 initiierten nächsten Bewegung des Schaltglieds 6 bis zur Endstellung 9 wird wieder zuerst das erste federnde Verdrehelement 25 vorgespannt und dann der Riegel 11 zum Schaltglied um den ersten Teilwinkel 21 verdreht, sobald in der Endstellung 9 das Schaltglied 6 aus dem Riegel 11 ausrückt und sich das federnde Verdrehelement 25 wieder entspannen kann.

Nach Deaktivierung des Aktuators 5 zieht das elastische Betätigungselement 10 das Schaltglied 6 wieder in Richtung Startstellung 7. Dabei treffen wieder die zweiten Wirkflächen 28 des Verdrehsystems 23 auf zweite schräge Formelemente 30 am Riegel 11, spannen die zweiten federnden Verdrehelemente 29 vor und verdrehen den Riegel 11 zum Schaltglied 6 wieder um den zweiten Teilwinkel 22. In der Mittelstellung 8 trifft das Schaltglied wieder mit seinen Schaltgliedanschlägen 14 auf die Riegelanschläge 15, die die axiale Bewegung des Schaltglieds in der Mittelstellung 8 begrenzen.

Fig. 17 zeigt ein drittes Ausführungsbeispiel der erfindungsgemäßen schaltbaren Kupplung 1. Sie wirkt hier wieder zwischen einem als Riemenscheibe ausgeführten Antriebselement 2 und einem als Abtriebswelle ausgeführten Abtriebselement 3. Fig. 18 zeigt weitere Details dieser Ausführungsvariante. Auch diese schaltbare Kupplung 1 hat einen vorzugsweise elektromagnetischen Aktuator 5. Alternativ ist auch hier wieder ein hydraulischer Aktuator möglich. Der Aktuator 5 sitzt wieder in einem Gehäuse 0, auf dem das Antriebselement 2 gelagert ist. Das Kupplungssystem 4 dieser schaltbaren Kupplung beinhaltet eine Reibungs-kupplung mit zwei Reibflächen, wie sie ebenfalls im Prinzip aus dem Stand der Technik bekannt ist. In den Fig. 17 und 18 ist das Kupplungssystem sowohl in der Schaltstellung "Kupplung = offen" mit dem Schaltglied 6 in der Startstellung 7 sowie in der Schaltstellung "Kupplung = geschlossen" mit dem Schaltglied 6 in der Endstellung 9 dargestellt.

Wie in Fig. 18 gezeigt ist, besteht die Reibungskupplung aus den beiden Kupplungs-lamellen 40, die mit dem Antriebselement 2 drehfest verbunden sind, und den beiden Reiblamellen 41, die mittels zweier Federbleche als erste elastische Betätigungs-elemente 10a mit einem Lamellenträger 61 drehfest verbunden, vorzugsweise vernietet, sind. Der Lamellenträger 61 steht über eine Zahnwellenverbindung mit dem Abtriebselement 3 in Eingriff und ist in axialer Richtung über einen Sprengring (alternativ eine Verschraubung) gehalten. Zwischen den beiden Federblechen 10a stecken mehrere Federhebel als zweite elastische Betätigungselemente 10b. Diese zweiten elastischen Betätigungselemente 10b greifen wieder mit ihren Enden in einen Haltering 68, der in Nuten mehrerer Haltenasen 69 am Schaltglied 6 eingeschnappt ist.

Das Schaltglied 6 ragt wieder in den Innendurchmesser des Aktuators 5 hinein. Wird der Aktuator aktiviert, so wird das Schaltglied in den Fig. 17 und 18 nach links bewegt und spannt dabei die elastischen Betätigungselemente 10a und 10b. Denn die Federhebel 10b sind so gestaltet, dass sie bei der Bewegung des Schaltglieds 6 in Richtung auf die Endstellung 9 hin die Federbleche 10a auseinander spreizen und damit die Reibungskupplung schon in der Mittelstellung 8 des Schaltglieds 6 schließen. Die Federhebel 10b können aber noch weiter verformt werden, um weitere Energie aufzunehmen, bis das Schaltglied 6 die Endstellung 9 erreicht. Während seiner axialen Bewegung steht das Schaltglied 6 wieder in einem komplexen Eingriff mit einem Riegel 11, der sich aber wieder nicht in axialer Richtung verlagern kann, da er mit geringem Spiel zwischen zwei axialen Anschlägen 12 und 13 sitzt.

Fig. 19 verdeutlicht die prinzipielle Anordnung von Schaltglied 6, Riegel 11 und Verdrehsystem 23, das in dieser Ausführungsvariante elastisch mit dem Riegel 11 verbunden ist. Der Riegel 11 hat mehrere Führungsnuten. In diese Führungsnuten 73 greift ein stirnverzahnter Ring 75 des Verdrehsystems 23 ein. In den Führungsnuten sitzen in dieser Ausführungsvariante Axialfedern 74, die den stirnverzahnten Ring 75 des Verdrehsystems in Fig. 19 nach rechts drücken. Der stirnverzahnte Ring 75 des Verdrehsystems kann aber maximal bis zu einem Anschlag 62 aus dem Riegel 11 herausgeschoben werden. Dieser Anschlag 62 wird in dieser Ausführungsvariante durch einen Anschlag am Lamellenträger 61 realisiert, der ja innerhalb der schaltbaren Kupplung 1 in axialer Richtung fixiert ist.

Die Fig. 20a bis 20f zeigen die Abfolge der Relativpositionen zwischen dem Schaltglied 6 mit Verdrehsystem 23 und dem Riegel 11 zwischen seinen axialen Anschlägen. In Fig. 20a, wie auch in Fig. 19, befindet sich das Schaltglied 6 zum Riegel 11 in einer ersten Relativposition 16 in Umfangsrichtung. Das Schaltglied 6 kann in dieser Relativposition nur bis zu einer Mittelstellung 8 in den Riegel 11 einrücken, bei der diese Ausführungsvariante der schaltbaren Kupplung im Zustand "Kupplung = geschlossen" ist. In der Mittelstellung 8 trifft das Schaltglied 6 mit einem Schaltgliedanschlag 14 auf einen Riegelanschlag 15 am Riegel. Der Riegel 11 hat zweite formschlüssige Sicherungselemente 34, die in dieser Mittelstellung 8 mit zweiten formschlüssigen Sicherungselementen 35 am Schaltglied 6 in Eingriff stehen. Der Riegelanschlag 15 und die zweiten formschlüssigen Sicherungselemente 34 am Riegel 11 werden zum Teil von den gleichen Wirkflächen am Riegel 11 gebildet. Ebenso werden auch der Schaltgliedanschlag 14 und die zweiten formschlüssigen Sicherungselemente 35 am Schaltglied 6 zum Teil von den gleichen Wirkflächen am Schaltglied 6 gebildet. Bewegt nun der Aktuator 5 das Schaltglied 6 relativ zum Riegel in Richtung Endstellung 9, in den Fig. 20 nach links, so treffen erste Wirkflächen 24 des in dieser Ausführungsvariante mit dem Riegel 11 elastisch verbundenen Verdrehsystems 23 auf erste schräge Formelemente 27 an einem stirnverzahnten Ring 76 des Schaltglieds 6 und spannen die Axialfedern 74 als erste federnde Verdrehelemente 25 vor. Das Schaltglied 6 kann sich aber noch nicht gegenüber dem Riegel 11 verdrehen, da noch immer zweite formschlüssige Sicherungselemente 34 am Riegel im Eingriff stehen mit zweiten formschlüssigen Sicherungselementen 35 am Schaltglied. Erst wenn, wie in Fig. 20c dargestellt, diese zweiten Sicherungselemente in der Endstellung 9 außer Eingriff kommen, können sich die Axialfedern 74 als erste federnde Verdrehelemente 25 entspannen und dabei den Riegel 11 gegenüber dem Schaltglied 6 um einen ersten Teilwinkel 21 verdrehen.

Nach der Verdrehung um diesen ersten Teilwinkel 21 verhindern erste formschlüssige Sicherungselemente 32 am Riegel, die dann mit ersten formschlüssigen Sicherungselementen 33 am Schaltglied in Eingriff stehen, eine weitere ungewollte Verdrehung. Diese ersten Sicherungselemente sind in dieser Ausführungsvariante die Zähne der stirnverzahnten Ringe 75 des mit dem Riegel verbundenen Verdrehsystems und 76 des Schaltglieds, die von den Axialfedern 74 in Eingriff gehalten werden.

Die geometrische Bedingung für den korrekten Kontakt zwischen den Wirkflächen 24 des mit dem Riegel 11 verbundenen Verdrehsystems 23 und den schrägen Formelementen 27 am Schaltglied 6 ist in dieser dritten Ausführungsvariante, dass der Teilungswinkel 57 zwischen den ersten formschlüssigen Sicherungselementen 33 und den zweiten formschlüssigen Sicherungselementen 35 am Schaltglied 6 minus dem Versatzwinkel 44 zwischen den ersten formschlüssigen Sicherungselementen 32 und den zweiten formschlüssigen Sicherungselementen 34 am Riegel 11 plus dem ersten Teilwinkel 21 oder minus dem zweiten Teilwinkel 22 ein ganzzahliges Vielfaches des Teilungswinkels 20 zwischen den Relativpositionen 16 und 18 ist. Dabei ist in dieser dritten Ausführungsvariante dieser Versatzwinkel 44 größer als Null, da diese Sicherungselemente eben nicht von koaxialen Nuten im Riegel gebildet werden.

In dieser Ausführungsvariante der erfindungsgemäßen Kupplung 1 ist darüber hinaus wichtig, dass der Teilungswinkel beider stirnverzahnter Ringe 75 und 76 genau so groß ist wie der Teilungswinkel 20. Nach der Verdrehung um den ersten Teilwinkel 21 stehen das Schaltglied 6 und der Riegel 11 in so einer Relativposition, dass nach der Deaktivierung der Aktuators 5 und in Folge der Kräfte aus den elastischen Betätigungselementen 10 der Riegel 11 mit zweiten Wirkflächen 28 des Verdrehsystems 23 auf zweite schräge Formelemente 31 am Schaltglied 6 trifft. Bei weiterer axialer Bewegung des Schaltglieds 6 in Richtung Startstellung 7 werden die Axialfedern 74 nun als zweite federnde Verdrehelemente 29 vorgespannt und der Riegel 11 zum Schaltglied 6 um einen zweiten Teilwinkel 22 verdreht, bis das Schaltglied 6 mit zuerst zweiten 35 und danach mit dritten formschlüssigen Sicherungselementen 37 in zuerst zweite 34 und danach dritte formschlüssige Sicherungselemente 36 am Riegel 11 eingreift. Auch in dieser Ausführungsvariante werden die zweiten und dritten Sicherungselemente am Riegel und am Schaltglied von den gleichen Wirkflächen gebildet. Diese Unterscheidung ist, wie bereits oben erwähnt, nur im Vergleich mit der ersten Ausführungsvariante nötig. Das Schaltglied 6 und der Riegel 11 bleiben in dieser zweiten Relativposition 18 bis das Schaltglied 6 in der Startstellung 7 auf einen Anschlag 19 für das Schaltglied in Startstellung 7 trifft. Dieser Anschlag 19 ist in dieser Ausführungsvariante als Anschlag am axial in der schaltbaren Kupplung 1 fixierten Lamellenträger 61 ausgeführt.

Die dritten formschlüssigen Sicherungselemente am Riegel 36 am Riegel bilden hier gleichzeitig die Riegelnut 17, durch die hindurch das Schaltglied 6 mit all seinen Formelementen bis in die Startstellung 7 hindurchgleiten kann. In dieser Startstellung 7 ist die schaltbare Kupplung in dieser Ausführungsvariante in der Schaltstellung "Kupplung = offen".

In der Startstellung 7 ist das Verdrehsystem 23 mit seinen Wirkflächen 24 wieder aus dem Schaltglied 6 ausgerückt. Die zweiten federnden Verdrehelemente 29 entspannen und das Verdrehsystem 23 kommt wieder in eine Relativposition zum Schaltglied 6, bei der wieder, bei einer Bewegung des Schaltglieds 6 in Richtung Endstellung 9, erste Wirkflächen 24 des Verdrehsystems auf erste schräge Formelemente 27 am Schaltglied 6 treffen.

In dieser Ausführungsvariante der schaltbaren Kupplung entstehen die ersten federnden Verdrehelemente 25 aus dem Zusammenwirken der Axialfedern 74 mit den schrägen ersten Wirkflächen 24 des Verdrehsystems, wenn diese auf die ersten schrägen Formelemente 27 am Schaltglied treffen. Die zweiten federnden Verdrehelemente 29 entstehen aus dem Zusammenwirken der gleichen Axialfedern 74 mit den zweiten Wirkflächen 28 des Verdrehsystems, wenn diese auf die zweiten schrägen Formelemente 31 am Schaltglied treffen. Nur so können in dieser Ausführungsvariante mittels einer Axialfeder über zwei Wirkflächen Verdrehmomente in Umfangsrichtung erzeugt werden. Bei der durch Aktivierung des Aktuators 5 initiierten nächsten Bewegung des Schaltglieds 6 bis zur Endstellung 9 wird wieder zuerst das erste federnde Verdrehelement 25 vorgespannt und dann der Riegel 11 zum Schaltglied um den ersten Teilwinkel 21 verdreht, sobald in der Endstellung 9 das Schaltglied 6 aus dem Riegel 11 ausrückt und sich das federnde Verdrehelement 25 wieder entspannen kann.

Nach Deaktivierung des Aktuators 5 zieht das elastische Betätigungselement 10 das Schaltglied 6 wieder in Richtung Startstellung 7. Dabei treffen wieder die zweiten Wirkflächen 28 des Verdrehsystems 23 auf zweite schräge Formelemente 31 am Schaltglied 6, spannen die zweiten federnden Verdrehelemente 29 vor und verdrehen den Riegel 11 zum Schaltglied 6 wieder um den zweiten Teilwinkel 22. In der Mittelstellung 8 trifft das Schaltglied wieder mit seinen Schaltgliedanschlägen 14 auf die Riegelanschläge 15, die die axiale Bewegung des Schaltglieds in der Mittelstellung begrenzen.

Für die Ausgestaltung des Schaltglieds 6, des Riegels 11 und des Verdrehsystems 23 aller drei Ausführungsvarianten und insbesondere die Ausgestaltung der Wirkflächen an den Eingriffselementen dieser Teile gibt es auch noch weitere konstruktive Lösungen, die alle hinsichtlich der Grundfunktion gleich wirken. Diese ist noch einmal zusammengefasst folgende:
Das Schaltglied 6 kann mit bestimmten Formelementen in entsprechende Formelemente am Riegel 11 eindringen, in einer ersten Relativposition aber nur bis zu einer Mittelstellung 8 und in einer zweiten Relativposition bis zu einer Startstellung 7. In der Startstellung 7 und in der Mittelstellung 8 hat die schaltbare Kupplung unterschiedlich Kupplungszustände (offen oder geschlossen). Bei einer Bewegung des Schaltglieds 6 relativ zum Riegel 11 von der Mittelstellung 8 bis zur Endstellung 9 sorgt ein Verdrehsystem 23 für die Verdrehung um einen ersten Teilwinkel 21. Bei einer Rückbewegung des Schaltglieds 6 relativ zum Riegel 11 von der Endstellung 9 bis zur Mittelstellung 8 sorgt das Verdrehsystem 23 für die weitere Verdrehung um einen zweiten Teilwinkel 22. Die beiden Teilwinkel 21 und 22 ergeben zusammen den Teilungswinkel 20. Der Riegel 11 mit dem eventuell damit verbundenen Verdrehsystem kommt dabei niemals komplett außer Eingriff mit Schaltglied 6 und dem eventuell damit verbundenen Verdrehsystem 23. Er kann sich also nicht so selbst oder durch andere Einwirkungen von außen in eine nicht gewollte Position verstellen.

Es ist natürlich für den Fachmann sofort klar, dass man die zuvor beschriebenen Bauteile auch alle aus weiteren Einzelteilen aufbauen kann, wenn dies die Fertigung der Bauteile vereinfacht.

Ebenso ist für den Fachmann klar, dass die verschiedenen Verriegelungssysteme, bestehend aus Schaltglied 6, Riegel 11 und Verdrehsystem 23, die an einer Variante der schaltbaren Kupplung beispielhaft erläutert sind, jeweils auch für die anderen Kupplungsvarianten anwendbar sind.

### Bezugszeichenliste

- 0: Gehäuse
- 1: schaltbare Kupplung
- 2: Antriebselement
- 3: Abtriebselement
- 4: Kupplungssystem
- 5: Aktuator
- 6: Schaltglied
- 7: Startstellung
- 8: Mittelstellung
- 9: Endstellung
- 10: elastisches Betätigungselement
- 10a: Erstes elastisches Betätigungselement
- 10b: zweites elastisches Betätigungselement
- 11: Riegel
- 12: Erster axialer Anschlag für den Riegel
- 13: zweiter axialer Anschlag für den Riegel
- 14: Schaltgliedanschlag
- 15: Riegelanschlag
- 16: erste Relativposition in Umfangsrichtung
- 17: Riegelnut
- 18: Zweite Relativposition in Umfangsrichtung
- 19: Anschlag für das Schaltglied in Startstellung
- 20: Teilungswinkel
- 21: Erster Teilwinkel
- 22: zweiter Teilwinkel
- 23: Verdrehsystem
- 24: erste Wirkflächen des Verdrehsystems
- 25: erste federnde Verdrehelemente
- 26: erste schräge Formelemente am Riegel
- 27: erste schräge Formelemente am Schaltglied
- 28: Zweite Wirkflächen des Verdrehsystems
- 29: Zweite federnde Verdrehelemente
- 30: Zweite schräge Formelemente am Riegel
- 31: Zweite schräge Formelemente am Schaltglied
- 32: erste formschlüssige Sicherungselemente am Riegel
- 33: erste formschlüssige Sicherungselemente am Schaltglied
- 34: Zweite formschlüssige Sicherungselemente am Riegel
- 35: Zweite formschlüssige Sicherungselemente am Schaltglied
- 36: dritte formschlüssige Sicherungselemente am Riegel
- 37: dritte formschlüssige Sicherungselemente am Schaltglied
- 38: Muffenträger
- 39: Deckelblech
- 40: Kupplungslamellen
- 41: Reiblamellen
- 42: Schaltverzahnung
- 43: Kupplungsmuffe
- 44: Versatzwinkel zwischen den ersten und zweiten formschlüssigen Sicherungselementen am Riegel
- 45: Federblech
- 46: Haltearm
- 47: äußerer Rand des Federbleches
- 48: innerer Rand des Federbleches
- 49: elastische Speichen des Federbleches
- 50: Elektromagnet
- 51: Anschlagszahn am Schaltglied
- 52: Kurzer Riegelzahn
- 53: Langer Riegelzahn
- 54: elastischer Verdreher
- 55: Federzungen
- 56: angeschrägte Endstücke
- 57: Teilungswinkel zwischen den ersten und zweiten formschlüssigen Sicherungselementen am Schaltglied
- 58: axialer Anschlag für erste federnde Verdrehelemente
- 59: axialer Anschlag für zweite federnde Verdrehelemente
- 60: Sicherungslasche am Schaltglied
- 61: Lamellenträger
- 62: Anschlag am Lamellenträger
- 63: Federstütze
- 64: Federbleche
- 65: Synchronring
- 66: Sperrverzahnung
- 67: Reibkonus
- 68: Haltering
- 69: Haltenasen
- 70: Zahnring des Verdrehsystems
- 71: erster Anschlag in Umfangrichtung im Schaltglied
- 72: zweiter Anschlag in Umfangrichtung im Schaltglied
- 73: Führungsnut
- 74: Axialfeder
- 75: stirnverzahnter Ring des Verdrehsystems
- 76: stirnverzahnter Ring des Schaltglieds

## Patentansprüche

1. Schaltbare Kupplung (1) zwischen einem Antriebselement (2) und einem Abtriebselement (3), wobei die schaltbare Kupplung (1) ein Kupplungssystem (4) für eine reib-oder/und formschlüssige Verbindung zwischen dem Antriebselement (2) und dem Abtriebselement (3) aufweist sowie einen vorzugsweise elektromagnetischen Aktuator (5) und ein Schaltglied (6) in Wirknähe zum Aktuator (5) und mindestens ein zwischen dem Abtriebselement (3) und dem Schaltglied (6) angeordnetes elastisches Betätigungselement (10), wobei das Schaltglied (6) stufenlos zwischen einer Startstellung (7) über eine Mittelstellung (8) bis zu einer Endstellung (9) bewegbar ist, wobei die schaltbare Kupplung (1) in der Mittelstellung (8) des Schaltglieds (6) einen anderen Zustand (offen oder geschlossen) aufweist als in der Startstellung (7), und wobei das elastische Betätigungselement (10) auf das Schaltglied (6) eine Kraft in Richtung Startstellung (7) ausübt und wobei der Aktuator (5) auf das Schaltglied (6) nur Kräfte in Richtung Endstellung (9) ausübt, deren Maximalwert in jeder Stellung den Kraftwert des elastischen Betätigungselements (10) übersteigt, **dadurch gekennzeichnet, dass** auf dem Abtriebselement (3) oder auf mit dem Abtriebselement (3) verbundenen Teilen ein Riegel (11) in Umfangsrichtung drehbar angeordnet ist, aber in axialer Richtung zwischen einem ersten Riegelanschlag (12) und einem zweiten Riegelanschlag (13) gehalten ist, und dass mit dem Schaltglied (6) oder mit dem Riegel (11) ein Verdrehsystem (23) verbunden ist, das erste Wirkflächen (24) aufweist, die bei einer Bewegung des Schaltglieds (6) von einer Position kurz hinter der Mittelstellung (8) bis zur Endstellung (9) auf erste schräge Formelemente (26) an dem Riegel (11) oder erste schräge Formelemente (27) an dem Schaltglied (6) stoßen und dabei erste federnde Verdrehelemente (25) vorspannen und dadurch den Riegel (11) relativ zum Schaltglied (6) um einen ersten Teilwinkel (21) verdrehen, und dass das Verdrehsystem (23) zweite Wirkflächen (28) aufweist, die bei einer Bewegung des Schaltglieds (6) von der Endstellung (9) zurück bis zur Mittelstellung (8) auf zweite schräge Formelemente (30) an dem Riegel (11) oder zweite schräge Formelemente (31) an dem Schaltglied (6) stoßen und dabei zweite federnde Verdrehelemente (29) vorspannen und dadurch den Riegel (11) relativ zum Schaltglied (6) um einen zweiten Teilwinkel (22) verdrehen.

2. Schaltbare Kupplung nach Anspruch 1, **dadurch gekennzeichnet, dass** der Riegel (11) nach einer ersten Bewegung des Schaltglieds (6) von der Startstellung (7) bis zur Endstellung (9) und wieder zurück zur Mittelstellung (8) in Umfangsrichtung eine erste Relativposition (16) zu dem Schaltglied (6) einnimmt, bei der in der Mittelstellung (8) das Schaltglied (6) mit einem Schaltgliedanschlag (14) in axialer Wirkrichtung auf ein Riegelanschlag (15) an dem Riegel (11) trifft und dass der Riegel (11) zweite formschlüssige Sicherungselemente (34) und das Schaltglied (6) zweite formschlüssige Sicherungselemente (35) aufweisen, die in dieser Mittelstellung (8) in Eingriff stehen und diese erste Relativposition (16) in Umfangsrichtung fixieren.

3. Schaltbare Kupplung nach einem der Ansprüche 1 und 2, **dadurch gekennzeichnet, dass** der Riegel (11) Riegelnuten (17) aufweist und dass der Riegel (11) nach einer zweiten Bewegung des Schaltglieds (6) von der Mittelstellung (8) bis zur Endstellung (9) und wieder zurück zur Mittelstellung (8) in Umfangsrichtung eine zweite Relativposition (18) zu dem Schaltglied (6) einnimmt, bei der ab der Mittelstellung (8) das Schaltglieds (6) mit all seinen Formelementen ungehindert durch die Riegelnuten (17) im Riegel (11) hindurchfahren kann, und zwar bis zur Startstellung (7), in der das Schaltglied auf einen Startanschlag (19) trifft, und dass der Riegel (11) dritte formschlüssige Sicherungselemente (36) und das Schaltglied (6) dritte formschlüssige Sicherungselemente (37) aufweisen, die in dieser zweiten Relativposition (18) in jeder Axialposition des Schaltglieds (6) zwischen der Mittelstellung (8) und der Startstellung (7) mit einander in Eingriff stehen und die Relativposition (18) in Umfangsrichtung fixieren.

4. Schaltbare Kupplung nach mindestens einem der Ansprüche 1 bis 3, **dadurch gekennzeichnet, dass** die erste Relativposition (16) und die zweite Relativposition (18) zwischen Schaltglied (6) und Riegei (11) in Umfangsrichtung um einen Teilungswinkel (20) versetzt sind und dass der erste Teilwinkel (21) und der zweite Teilwinkel (22) zusammen den Teilungswinkel (20) ergeben und dass der Teilungswinkel (20) ein geradzahliger Teilwinkel von 360° ist.

5. Schaltbare Kupplung nach mindestens einem der Ansprüche 1 bis 4, **dadurch gekennzeichnet, dass**, wenn sich das Schaltglied (6) in der Mittelstellung (8) befindet, die ersten Wirkflächen (24) des Verdrehsystems (23) außer Eingriff mit dem Schaltglied (6) oder dem Riegel (11) sind und dadurch die ersten federnden Verdrehelemente (25) entspannt sind.

6. Schaltbare Kupplung nach mindestens einem der Ansprüche 1 bis 5, **dadurch gekennzeichnet, dass**, wenn sich das Schaltglied (6) in der Endstellung (9) befindet, die zweiten Wirkflächen (28) des Verdrehsystems (23) außer Eingriff mit dem Schaltglied (6) oder dem Riegel (11) sind und dadurch die zweiten federnden Verdrehelemente (29) entspannt sind.

7. Schaltbare Kupplung nach mindestens einem der Ansprüche 1 bis 6, **dadurch gekennzeichnet, dass** der Teilungswinkel 57 zwischen den ersten formschlüssigen Sicherungselementen 33 und den zweiten formschlüssigen Sicherungselementen 35 am Schaltglied 6 minus dem Versatzwinkel 44 zwischen den ersten formschlüssigen Sicherungselementen 32 und den zweiten formschlüssigen Sicherungselementen 34 am Riegel 11 plus dem ersten Teilwinkel 21 oder minus dem zweiten Teilwinkel 22 ein ganzzahliges Vielfaches des Teilungswinkels 20 zwischen der ersten Relativposition 16 und der zweiten Relativposition 18 ist.

8. Schaltbare Kupplung nach mindestens einem der Ansprüche 1 bis 7, **dadurch gekennzeichnet, dass**, wenn sich das Schaltglied (6) in der Endstellung (9) befindet, erste formschlüssige Sicherungselemente (32) am Riegel (11) mit ersten formschlüssigen Sicherungselementen (33) am Schaltglied (6) in Eingriff stehen und die Relativposition von Schaltglied (6) und Riegel (11) in Umfangsrichtung fixieren.

## Claims

1. Switchable coupling (1) between a drive element (2) and a driven element (3), the switchable coupling (1) having a coupling system (4) for frictional and/or positive connection between the drive element (2) and the driven element (3) and also a preferably electromagnetic actuator (5) and a switching member (6) in operative proximity to the actuator (5) and at least one elastic actuation element (10) arranged between the driven element (3) and the switching member (6), the switching member (6) being movable continuously between a starting position (7) through a middle position (8) as far as an end position (9), the switchable coupling (1) having, in the middle position (8) of the switching member (6), a state (open or closed) other than that in the starting position (7), and the elastic actuation element (10) exerting a force in the direction of the starting position (7) upon the switching member (6), and the actuator (5) exerting upon the switching member (6) only forces in the direction of the end position (9), the maximum value of which exceeds the force value of the elastic actuation element (10) in any position, **characterized in that**, on the driven element (3) or on parts connected to the driven element (3), a locking bar (11) is arranged rotatably in the circumferential direction, but is held in the axial direction between a first locking-bar stop (12) and a second locking-bar stop (13), and **in that** the switching member (6) or the locking bar (11) has connected to it a rotary system (23) having first operative surfaces (24) which, during movement of the switching member (6) from a position just behind the middle position (8) as far as the end position (9), butt onto first oblique shaped elements (26) on the locking bar (11) or onto first oblique shaped elements (27) on the switching member (6) at the same time prestress first resilient rotary elements (25) and thereby rotate the locking bar (11) in relation to the switching member (6) through a first subangle (21), and **in that** the rotary system (23) has second relative surfaces (28) which, during movement of the switching member (6) back from the end position (9) as far as the middle position (8), butt onto second oblique shaped elements (30) on the locking bar (11) or onto second oblique shaped elements (31) on the switching member (6) and at the same time prestress second resilient rotary elements (29) and thereby rotate the locking bar (11) in relation to the switching member (6) through a second subangle (22).

2. Switchable coupling according to Claim 1, **characterized in that**, after a first movement of the switching member (6) from the starting position (7) as far as the end position (9) and back again to the middle position (8), the locking bar (11) assumes in its circumferential direction, with respect to the switching member (6), a first relative position (16) in which, in the middle position (8), the switching member (6) impacts with a switching-member stop (14) in the axial operative direction onto a locking-bar stop (15) on the locking bar (11), and **in that** the locking bar (11) has second positive securing elements (34) and the switching member (6) has second positive securing elements (35), which securing elements are in engagement in this middle position (8) and fix this first relative position (16) in the circumferential direction.

3. Switchable coupling according to either one of Claims 1 and 2, **characterized in that** the locking bar (11) has locking-bar grooves (17), and **in that**, after a second movement of the switching member (6) from the middle position (8) as far as the end position (9) and back again to the middle position (8), the locking bar (11) assumes in the circumferential direction, with respect to the switching member (6), a second relative position (18) in which, from the middle position (8), the switching member (6) can move, unimpeded, with all its shaped elements through the locking-bar grooves (17) in the locking bar (11), specifically as far as the starting position (7) in which the switching member impacts onto a starting stop (19), and **in that** locking bar (11) has third positive securing elements (36) and the switching member (6) has third positive securing elements (37), which securing elements, in this second relative position (18), are in engagement with one another in any axial position of the switching member (6) between the middle position (8) and the starting position (7) and fix the relative position (18) in the circumferential direction.

4. Switchable coupling according to at least one of Claims 1 to 3, **characterized in that** the first relative position (16) and the second relative position (18) between the switching member (6) and locking bar (11) are offset in the circumferential direction by the amount of a pitch angle (20), and **in that** the first subangle (21) and the second subangle (22) together produce the pitch angle (20), and **in that** the pitch angle (20) is an even-numbered subangle of 360°.

5. Switchable coupling according to at least one of Claims 1 to 4, **characterized in that**, when the switching member (6) is in the middle position (8), the first operative surfaces (24) of the rotary system (23) are out of engagement with the switching member (6) or with the locking bar (11), and the first resilient rotary elements (25) are thereby stress-relieved.

6. Switchable coupling according to at least one of Claims 1 to 5, **characterized in that**, when the switching member (6) is in the end position (9), the second operative surfaces (28) of the rotary system (23) are out of engagement with the switching member (6) or with the locking bar (11), and the second resilient rotary elements (29) are thereby stress-relieved.

7. Switchable coupling according to at least one of Claims 1 to 6, **characterized in that** the pitch angle (57) between the first positive securing elements (33) and the second positive securing elements (35) on the switching member (6), minus the offset angle (44) between the first positive securing elements (32) and the second positive securing elements (34) on the locking bar (11), plus the first subangle (21) or minus the second subangle (22), is an integral multiple of the pitch angle (20) between the first relative position (16) and the second relative position (18).

8. Switchable coupling according to at least one of Claims 1 to 7, **characterized in that**, when the switching member (6) is in the end position (9), first positive securing elements (32) on the locking bar (11) are in engagement with first positive securing elements (33) on the switching member (6) and fix the relative position of the switching member (6) and locking bar (11) in the circumferential direction.

## Revendications

1. Embrayage commutable (1) entre un élément d'entraînement (2) et un élément de sortie (3), l'embrayage commutable (1) comprenant un système d'embrayage (4) pour une liaison par engagement par friction et/ou par complémentarité de formes entre l'élément d'entraînement (2) et l'élément de sortie (3) ainsi qu'un actionneur (5) de préférence électromagnétique et un organe de commutation (6) à proximité fonctionnelle de l'actionneur (5) et au moins un élément d'actionnement élastique (10) disposé entre l'élément de sortie (3) et l'organe de commutation (6), l'organe de commutation (6) pouvant être déplacé en continu entre une position de départ (7) et une position finale (9) en passant par une position centrale (8), l'embrayage commutable (1) présentant, dans la position centrale (8) de l'organe de commutation (6), un autre état (ouvert ou fermé) que dans la position de départ (7), et l'élément d'actionnement élastique (10) exerçant sur l'organe de commutation (6) une force en direction de la position de départ (7), et l'actionneur (5) n'exerçant sur l'organe de commutation (6) que des forces en direction de la position finale (9), dont la valeur maximale dans chaque position dépasse la valeur de force de l'élément d'actionnement élastique (10), **caractérisé en ce qu'**un élément de verrouillage (11) est disposé de manière rotative dans la direction périphérique sur l'élément de sortie (3) ou sur des parties reliées à l'élément de sortie (3), mais est retenu entre une première butée d'élément de verrouillage (12) et une deuxième butée d'élément de verrouillage (13) dans la direction axiale, et **en ce qu'**un système de rotation (23) est relié à l'organe de commutation (6) ou à l'élément de verrouillage (11), lequel système de rotation comprend des premières surfaces actives (24) qui, lors d'un déplacement de l'organe de commutation (6) à partir d'une position juste derrière la position centrale (8) jusqu'à la position finale (9), butent sur des premiers éléments façonnés obliques (26) sur l'élément de verrouillage (11) ou des premiers éléments façonnés obliques (27) sur l'organe de commutation (6) et précontraignent en l'occurrence des premiers éléments de rotation élastiques (25) et font de ce fait tourner l'élément de verrouillage (11) par rapport à l'organe de commutation (6) d'un premier pas angulaire (21), et **en ce que** le système de rotation (23) comprend des deuxièmes surfaces actives (28) qui, lors d'un déplacement de retour de l'organe de commutation (6) à partir de la position finale (9) jusqu'à la position centrale (8), butent sur des deuxièmes éléments façonnés obliques (30) sur l'élément de verrouillage (11) ou des deuxièmes éléments façonnés obliques (31) sur l'organe de commutation (6) et précontraignent en l'occurrence des deuxièmes éléments de rotation élastiques (29) et font de ce fait tourner l'élément de verrouillage (11) par rapport à l'organe de commutation (6) d'un deuxième pas angulaire (22).

2. Embrayage commutable selon la revendication 1, **caractérisé en ce que** l'élément de verrouillage (11), après un premier déplacement de l'organe de commutation (6) à partir de la position de départ (7) jusqu'à la position finale (9) et de retour à la position centrale (8), adopte une première position relative (16) par rapport à l'organe de commutation (6) dans la direction périphérique, dans laquelle première position relative l'organe de commutation (6), dans la position centrale (8), frappe par une butée d'organe de commutation (14), dans la direction fonctionnelle axiale, sur une butée d'élément de verrouillage (15) sur l'élément de verrouillage (11), et **en ce que** l'élément de verrouillage (11) comprend des deuxièmes éléments de fixation à complémentarité de formes (34) et l'organe de commutation (6) comprend des deuxièmes éléments de fixation à complémentarité de formes (35), lesquels sont en prise dans cette position centrale (8) et fixent cette première position relative (16) dans la direction périphérique.

3. Embrayage commutable selon l'une quelconque des revendications 1 et 2, **caractérisé en ce que** l'élément de verrouillage (11) comprend des rainures d'élément de verrouillage (17), et **en ce que** l'élément de verrouillage (11), après un deuxième déplacement de l'organe de commutation (6) à partir de la position centrale (8) jusqu'à la position finale (9) et de retour à la position centrale (8), adopte une deuxième position relative (18) par rapport à l'organe de commutation (6) dans la direction périphérique, dans laquelle deuxième position relative l'organe de commutation (6) avec tous ses éléments façonnés peut, à partir de la position centrale (8), se déplacer de manière non entravée à travers les rainures d'élément de verrouillage (17) dans l'élément de verrouillage (11), et ce jusqu'à la position de départ (7), dans laquelle l'organe de commutation frappe sur une butée de départ (19), et **en ce que** l'élément de verrouillage (11) comprend des troisièmes éléments de fixation à complémentarité de formes (36) et l'organe de commutation (6) comprend des troisièmes éléments de fixation à complémentarité de formes (37), lesquels, dans cette deuxième position relative (18), sont en prise les uns avec les autres dans chaque position axiale de l'organe de commutation (6) entre la position centrale (8) et la position de départ (7) et fixent la position relative (18) dans la direction périphérique.

4. Embrayage commutable selon au moins l'une quelconque des revendications 1 à 3, **caractérisé en ce que** la première position relative (16) et la deuxième position relative (18) entre l'organe de commutation (6) et l'élément de verrouillage (11) sont décalées d'un pas angulaire (20) dans la direction périphérique, et **en ce que** le premier pas angulaire (21) et le deuxième pas angulaire (22) produisent conjointement le pas angulaire (20), et **en ce que** le pas angulaire (20) est un pas angulaire pair de 360°.

5. Embrayage commutable selon au moins l'une quelconque des revendications 1 à 4, **caractérisé en ce que**, lorsque l'organe de commutation (6) se trouve dans la position centrale (8), les premières surfaces actives (24) du système de rotation (23) sont hors de prise avec l'organe de commutation (6) ou l'élément de verrouillage (11) et les premiers éléments de rotation élastiques (25) sont de ce fait détendus.

6. Embrayage commutable selon au moins l'une quelconque des revendications 1 à 5, **caractérisé en ce que**, lorsque l'organe de commutation (6) se trouve dans la position finale (9), les deuxièmes surfaces actives (28) du système de rotation (23) sont hors de prise avec l'organe de commutation (6) ou l'élément de verrouillage (11) et les deuxièmes éléments de rotation élastiques (29) sont de ce fait détendus.

7. Embrayage commutable selon au moins l'une quelconque des revendications 1 à 6, **caractérisé en ce que** le pas angulaire (57) entre les premiers éléments de fixation à complémentarité de formes (33) et les deuxièmes éléments de fixation à complémentarité de formes (35) sur l'organe de commutation (6) moins l'angle de décalage (44) entre les premiers éléments de fixation à complémentarité de formes (32) et les deuxièmes éléments de fixation à complémentarité de formes (34) sur l'élément de verrouillage (11) plus le premier pas angulaire (21) ou moins le deuxième pas angulaire (22) est un multiple entier du pas angulaire (20) entre la première position relative (16) et la deuxième position relative (18).

8. Embrayage commutable selon au moins l'une quelconque des revendications 1 à 7, **caractérisé en ce que**, lorsque l'organe de commutation (6) se trouve dans la position finale (9), des premiers éléments de fixation à complémentarité de formes (32) sur l'élément de verrouillage (11) sont en prise avec des premiers éléments de fixation à complémentarité de formes (33) sur l'organe de commutation (6) et fixent la position relative de l'organe de commutation (6) et de l'élément de verrouillage (11) dans la direction périphérique.
